(19) Europäisches Patentamt / European Patent Office / Office européen des brevets

(11) **EP 4 025 055 B1**

(12) **EUROPEAN PATENT SPECIFICATION**

(45) Date of publication and mention
of the grant of the patent:
**25.12.2024   Bulletin 2024/52**

(21) Application number: **20775409.4**

(22) Date of filing: **04.09.2020**

(51) International Patent Classification (IPC):
*A21D 2/18* (2006.01)    *A21D 2/36* (2006.01)
*A21D 10/04* (2006.01)    *A23L 13/00* (2016.01)
*A23L 13/50* (2016.01)    *A23P 20/15* (2016.01)
*A23P 20/10* (2016.01)    *A23P 20/12* (2016.01)

(52) Cooperative Patent Classification (CPC):
**A23L 13/57; A21D 2/186; A21D 2/362;
A21D 10/04; A23L 13/03; A23P 20/105;
A23P 20/15;** A23P 20/12

(86) International application number:
**PCT/IB2020/058282**

(87) International publication number:
**WO 2021/044380 (11.03.2021 Gazette 2021/10)**

(54) **PREGELATINIZED PEA STARCH FOR BATTER AND COATING**

VORGELATINIERTE ERBSENSTÄRKE FÜR TEIG UND ÜBERZUG

AMIDON DE POIS PRÉGÉLATINISÉ POUR PÂTE À FRIRE ET ENROBAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **06.09.2019   US 201962897140 P**

(43) Date of publication of application:
**13.07.2022   Bulletin 2022/28**

(73) Proprietor: **ROQUETTE FRERES
62136 Lestrem (FR)**

(72) Inventor: **PERERA, Chandani
62136 Lestrem (FR)**

(74) Representative: **Uexküll & Stolberg
Partnerschaft von
Patent- und Rechtsanwälten mbB
Beselerstraße 4
22607 Hamburg (DE)**

(56) References cited:
**EP-A1- 2 630 871       WO-A1-2011/101664
WO-A1-2017/187039     WO-A1-2018/191395
US-A1- 2005 220 962**

## Description

### FIELD

The present disclosure relates to a method for preparing batter mixtures free of hydrocolloids, comprising pregelatinized pea starch characterized by specific values of granulometry, to batter mixtures free of hydrocolloids and comprising the pregelatinized pea starch, and to a method of coating a food product in the batter mixture.

### BACKGROUND

Batters are aqueous mixtures used for coating food products, such as meat and vegetables, including for use with deep frying. Coating of food products with batter prior to deep frying is common as it can act to improve the appearance, enhance the flavor, reduce dehydration, aid in enhanced coloring, and reduce dehydration of the food product. Further, coating food products with batter can also aid in reducing water loss and less oil absorption during deep frying.

Dextrins, a type of hydrocolloid, are often added to batters to improve crispness once the coated food product has been deep fried. However, there is a need to find alternatives to dextrins as they are not considered "clean" ingredients.

An alternative to dextrins is native starches, however, they are often considered not the best solution as the batter does not stay viscous unless cooked. Batter viscosity is a determinant of the amount of batter pick-up on the food product.

Pregelatinized starches are a desirable alternative as they can provide viscosity to the aqueous batter without cooking, however, pregelatinized starches can result in lumping of batters. WO 2011/101664 A1 discloses an edible batter composition for coating a food product (e.g. chicken nugget) for frying, said edible batter composition comprising 27-57% flour; 40-70% water; 0.15-3% of a protein and/or peptide mixture derived; a leavening system; 0-10% of one or more colouring agents; and 1.5-18% of native or modified starch.

Therefore there is a need to identify a "clean" alternative to hydrocolloids that provides viscosity to aqueous batter, limits lumps, and maintains a crispy coating post deep frying.

### BRIEF SUMMARY

In one aspect, this disclosure provides a method of making a batter mixture free of hydrocolloids, where the method comprises the steps of (a) providing a pregelatinized pea starch, wherein the pregelatinized pea starch has a granulometry characterized by a "n" value and a "d" value according to German norm DIN 66145, wherein the "n" value is from 1.2 to 1.8 and the "d" value is from 80 to 150 μm; and (b) mixing the pregelatinized pea starch into a batter mixture, where the percentage of the pregelatinized pea starch is from 1 to 10% (w/w) of the dry weight in the batter mixture, and where the batter mixture does not comprise a hydrocolloid.

In one aspect, the batter mixture used in the methods and compositions described herein comprises fine granulometry pregelatinized pea starch and one or more flours. In one aspect, the batter mixture used in the methods and compositions described herein further comprises one or more leavening agents, one or more flavoring agents, one or more buffering agents, or any combination thereof. In one aspect, the batter mixture used in the methods and compositions described herein comprises one or more flours, one or more leavening agents, one or more flavoring agents, one or more buffering agents, or any combination thereof. In one aspect, the flours used in the batter mixtures described herein are selected from the group consisting of wheat flour, corn flour, rice flour, potato flour, oat flour, and any combination thereof.

In one aspect, the batter mixture used in the methods and compositions described herein is a liquid mixture. In another aspect, the batter mixture used in the methods and compositions described herein is a dry mixture. In one aspect, the viscosity of a liquid batter mixture comprising the pregelatinized pea starch used in the methods and compositions described herein is higher than the viscosity of a control batter mixture without the pregelatinized pea starch. In one aspect, the viscosity of a liquid batter mixture comprising the pregelatinized pea starch used in the methods and compositions described herein is higher than the viscosity of a batter mixture comprising pregelatinized corn starch or pregelatinized potato starch instead of the pregelatinized pea starch.

In one aspect, the liquid batter mixture comprising the pregelatinized pea starch used in the methods and compositions described herein has less amount of lumps compared to a liquid batter mixture comprising pregelatinized corn starch or pregelatinized potato starch instead of the pregelatinized pea starch.

In one aspect, this disclosure provides a method of making a wheat flour based batter mix free of hydrocolloids with a pregelatinized pea starch, where the method comprises the steps of (a) providing fine granulometry pregelatinized pea starch, where the granulometry is characterized by a "n" value and "d" value according to German norm DIN 66145, where the "n" value is from 1.2 to 1.8 and the "d" value is from 100 to 120 μm; (b) mixing the pregelatinized pea starch with wheat flour to make a batter mix, where the pregelatinized pea starch comprises from 1 to 7% (w/w) of the dry weight in the batter mix, and where the combined pregelatinized pea starch and wheat flour constitutes 92 to 94% of the dry weight in the batter mix; (c) providing 4 to 6% (w/w) of salt, 0.5 to 1.5% (w/w) of sodium acid pyrophosphate, 0.6 to 1% (w/w) of sodium bicarbonate, and 0.6 to 1% (w/w) of dextrose to the batter mix; and (d) providing water at 7°C to the batter mix, where the ratio of water to dry ingredients in the batter mix is 3:2 (w/w) and where the water and the dry ingredients is mixed for 8 to 12 minutes and maintained at 16 to 20.5°C.

In one aspect, this disclosure provides a composition of pregelatinized pea starch and wheat flour based batter mix where the composition comprises: pregelatinized pea starch mixed with wheat flour and water to form a batter mix, where the batter mix comprises from 1% to 7% (w/w of the dry weight) pregelatinized pea starch, 5% (w/w) of salt, 1% (w/w) of sodium acid pyrophosphate, 0.8% (w/w) of sodium bicarbonate, and 0.8% (w/w) dextrose, where the ratio of water to dry ingredients in the batter mix is 3:2 (w/w), and where the batter mix exhibits a Brookfield viscosity from about 2000 cps to about 4500 cps.

In one aspect, this disclosure provides a method of coating a food product, where the method comprising: coating a food product in a batter mixture, where the batter mix comprises a pregelatinized starch, wherein the pregelatinized pea starch has a granulometry characterized by a "n" value and a "d" value according to German norm DIN 66145, wherein the "n" value is from 1.2 to 1.8 and the "d" value is from 80 to 150 $\mu$m; and where the percentage of the pregelatinized pea starch is from 1 to 10% (w/w) of the dry weight in the batter mixture, and where the composition is free of hydrocolloids.

In one aspect, this disclosure provides a method of coating a food product for deep frying with a pregelatinized pea starch and wheat flour based mixture, where the method comprises coating the food product in a pregelatinized pea starch mixed with wheat flour and water to form a batter mix, where the batter mix comprises from 1 to 7% (w/w of the dry weight) pregelatinized pea starch, 5% (w/w) of salt, 1% (w/w) of sodium acid pyrophosphate, 0.8% (w/w) of sodium bicarbonate, and 0.8% (w/w) dextrose, where the ratio of water to dry ingredients in the batter mix is 3:2 (w/w), and where the batter mix exhibits a Brookfield viscosity from about 2000 cps to about 4500 cps.

## BRIEF DESCRIPTION OF THE DRAWINGS

Figure 1 depicts representative images of the number of lumps in control, 7% PREGEFLO® P100, 7% PREGEFLO® M, and 7% PREGEFLO® L100F aqueous wheat flour batter mixtures.

Figure 2 depicts the colorimeter reading of chicken nuggets coated in control, 5% PREGEFLO® L100F (PPS), and 7% PREGEFLO® L100F (PPS) aqueous wheat flout batter mixtures and then deep fried. "L" is the reading of lightness and is represented by the diamond (♦), "a" is the reading of redness and represented by the square (■) and "b" is the reading of yellowness and represented by a triangle (▲).

## DETAILED DESCRIPTION

Unless defined otherwise, all technical and scientific terms used have the same meaning as commonly understood by one of ordinary skill in the art to which this disclosure belongs. Where a term is provided in the singular, the inventors also contemplate aspects of the disclosure described by the plural of that term. Where there are discrepancies in terms and definitions used in references that are incorporated by reference, the terms used in this application shall have the definitions given herein. Other technical terms used have their ordinary meaning in the art in which they are used, as exemplified by various art-specific dictionaries, for example, "The American Heritage® Science Dictionary" (Editors of the American Heritage Dictionaries, 2011, Houghton Mifflin Harcourt, Boston and New York), the "McGraw-Hill Dictionary of Scientific and Technical Terms" (6th edition, 2002, McGraw-Hill, New York), or the "Oxford Dictionary of Biology" (6th edition, 2008, Oxford University Press, Oxford and New York). The inventors do not intend to be limited to a mechanism or mode of action. Reference thereto is provided for illustrative purposes only.

As used herein, the singular form "a," "an," and "the" include plural references unless the context clearly dictates otherwise. For example, the term "a compound" or "at least one compound" may include a plurality of compounds, including mixtures thereof.

As used herein, the term "about" indicates that a value includes the inherent variation of error for the method being employed to determine a value, or the variation that exists among experiments.

As used herein, the term "batter mixture" or "batter mix" refers to a flour-based mixture that can be used to coat a food product for frying. For example, a batter mixture may comprise wheat flour, corn flour, or rice flour as its main ingredient. A batter mixture may also comprise other ingredients such as other flours, starch and starch derivatives, hydrocolloids, leavening agents, flavoring agents, and colorants. In one aspect, a batter mixture is a dry mixture. In another aspect, a batter mixture is a liquid mixture. In a further aspect, a batter mixture is an aqueous mixture.

As used herein, the term "pea starch" refers to starch prepared from the seeds of *Pisum Sativum.* In one aspect, a pea starch is prepared from garden peas (*Pisum Sativum* ssp. *Hortense*). In another aspect, a pea starch is prepared from field peas (*Pisum Sativum* ssp. *arvense*). In one aspect, a pea starch is prepared from fresh peas. In another aspect, a pea starch is prepared from frozen peas. In one aspect, a pea starch does not comprise a significant amount of protein. In one aspect, a pea starch comprises no more than 5% (w/w) of protein. In another aspect, a pea starch does not comprise a significant amount of fibers. In one aspect, a pea starch comprises an amylose content greater than 25% (w/w). In another aspect, a pea starch comprises an amylose content greater than 30% (w/w). In a further aspect, a pea starch comprises an amylose content greater than 35% (w/w).

As used herein, the term "pregelatinized starch" refers to a starch which has been cooked and then dried, e.g., in the starch factory on a drum dryer or in an extruder, making the starch cold-water-soluble. Pregelatinized starch can be obtained by, e.g., steam cooking, jet-cooker cooking, cooking on a drum, cooking in kneader/extruder systems, followed by drying, for example, in an oven, by hot air on a fluidized bed, on rotating drum, by atomization, by extrusion, or by lyophilization. A pregelatinized starch can be further processed, e.g., by using a hammer mill, to obtain fine granulometry pregelatinized starch with desirable particle sizes.

As used herein, the term "fine granulometry" is characterized by the grain (particle) equivalent diameter "d" and the slope "n" of the representation of grain particle size distribution (RRSB) function according to German norm DIN 66145. The fine granulometry refers to a granulometry characterized by an "n" value from 1.2 to 1.8 and a "d" value from 80 to 150 μm according to German norm DIN 66145. In one aspect, a fine granulometry refers to a granulometry characterized by an "n" value from 1.2 to 1.8 and a "d" value from 100 to 120 μm according to German norm DIN 66145.

In one aspect, the pregelatinized pea starch used in the methods and compositions disclosed herein has an "n" value from 1.2 to 1.8 and a "d" value from 100 to 120 μm according to German norm DIN 66145.

In one aspect, the pregelatinized pea starch has an "n" value from 1.2 to 1.3, from 1.3 to 1.4, from 1.4 to 1.5, from 1.5 to 1.6, from 1.6 to 1.7, from 1.7 to 1.8, from 1.2 to 1.4, from 1.2 to 1.5, from 1.2 to 1.6, from 1.2 to 1.7, from 1.2 to 1.8, from 1.3 to 1.5, from 1.3. to 1.6, from 1.3 to 1.7, from 1.3 to 1.8, from 1.4 to 1.6, from 1.4 to 1.7 from 1.4 to 1.8, from 1.5 to 1.7, from 1.5 to 1.8, or from 1.6 to 1.8 according to German norm DIN 66145. In one aspect, the pregelatinized pea starch has an "n" value of about 1.2, about 1.3, about 1.4, about 1.5, about 1.6, about 1.7, or about 1.8 according to German norm DIN 66145.

In one aspect, the pregelatinized pea starch has a "d" value from 80 to 85 μm, 85 to 90 μm, 90 to 95 μm, 95 to 100 μm, 100 to 105 μm, 105 to 110 μm, 110 to 115 μm, 115 to 120 μm, 120 to 125 μm, 125 to 130 μm, 130 to 135 μm, 135 to 140 μm, 140 to 145 μm, 145 to 150 μm, 80 to 90 μm, 85 to 95 μm, 90 to 100 μm, 95 to 105 μm, 100 to 110 μm, 105 to 115 μm, 110 to 120 μm, 115 to 125 μm, 120 to 130 μm, 135 to 145 μm, 130 to 140 μm, 140 to 150 μm, 80 to 95 μm, 85 to 100 μm, 90 to 105 μm, 95 to 110 μm, 100 to 115 μm, 105 to 120 μm, 110 to 125 μm, 115 to 130 μm, 120 to 135 μm, 125 to 140 μm, 130 to 145 μm, 135 to 150 μm, 80 to 100 μm, 85 to 105 μm, 90 to 110 μm, 95 to 115 μm, 100 to 120 μm, 105 to 125 μm, 110 to 130 μm, 115 to 135 μm, 120 to 140 μm, 125 to 145 μm, 130 to 150 μm, 80 to 105 μm, 85 to 110 μm, 90 to 115 μm, 95 to 120 μm, 100 to 125 μm, 105 to 130 μm, 110 to 135 μm, 115 to 140 μm, 120 to 145 μm, 125 to 150 μm, 80 to 110 μm, 85 to 115 μm, 90 to 120 μm, 95 to 125 μm, 100 to 130 μm, 105 to 135 μm, 110 to 140 μm, 115 to 145 μm, 120 to 150 μm, 80 to 115 μm, 85 to 120 μm, 90 to 125 μm, 95 to 130 μm, 100 to 135 μm, 105 to 140 μm, 110 to 145 μm, 115 to 150 μm, 80 to 120 μm, 85 to 125 μm, 90 to 130 μm, 95 to 135 μm, 100 to 140 μm, 105 to 145 μm, 110 to 150 μm, 80 to 125 μm, 85 to 130 μm, 90 to 135 μm, 95 to 140 μm, 100 to 145 μm, 105 to 150 μm, 80 to 130 μm, 85 to 135 μm, 90 to 140 μm, 95 to 145 μm, 100 to 150 μm, 80 to 135 μm, 85 to 140 μm, 90 to 145 μm, 95 to 150 μm, 80 to 140 μm, 85 to 145 μm, 90 to 150 μm, 80 to 145 μm, or 85 to 150 μm according to German norm DIN 66145. In one aspect, the pregelatinized pea starch has an "d" value of about 80 μm, about 81 μm, about 82 μm, about 83 μm, about 84 μm, about 85 μm, about 86 μm, about 87 μm, about 88 μm, about 89 μm, about 90 μm, about 91 μm, about 92 μm, about 93 μm, about 94 μm, about 95 μm, about 96 μm, about 97 μm, about 98 μm, about 99 μm, about 100 μm, about 101 μm, about 102 μm, about 103 μm, about 104 μm, about 105 μm, about 106 μm, about 107 μm, about 108 μm, about 109 μm, about 110 μm, about 111 μm, about 112 μm, about 113 μm, about 114 μm, about 115 μm, about 116 μm, about 117 μm, about 118 μm, about 119 μm, about 120 μm, about 121 μm, about 122 μm, about 123 μm, about 124 μm, about 125 μm, about 126 μm, about 127 μm, about 128 μm, 129 μm, about 130 μm, about 131 μm, about 132 μm, about 133 μm, about 134 μm, about 135 μm, about 136 μm, about 137 μm, about 138 μm, about 139 μm, about 140 μm, about 141 μm, about 142 μm, about 143 μm, about 144 μm, about 145 μm, about 146 μm, about 147 μm, about 148 μm, about 149 μm, or about 150 μm according to German norm DIN 66145.

In one aspect, a pregelatinized starch used in the methods and compositions described herein may be obtained from the products manufactured and sold under the brand name PREGEFLO®. For example, as used herein, PREGEFLO® L100G is from pea starch, PREGEFLO® P100 is from potato starch, and PREGEFLO® M is from corn starch. PREGEFLO® L100G may be processed, e.g, using a hammer mill, to prepare PREGEFLO® L100F (F for Fine granulometry).

As used herein, the term "hydrocolloid" refers to a substance that forms a gel in the presence of water. Hydrocolloids are employed in food mainly to influence texture or viscosity. Many hydrocolloids are derived from natural polysaccharide sources. Non-exclusive examples of hydrocolloids include gelatin, pectin, agar, carrageenan, xanthan gum, gum arabic, guar gum, locust bean gum, dextrin, and cellulose derivatives such as carboxymethyl cellulose (CMC), hydroxyethyl cellulose (HEC), hydroxypropyl cellulose (HPC), and hydroxypropyl methylcellulose (HPMC).

As used herein, the term "hydrocolloid" does not include starch or flour. As used herein, the term "free of hydrocolloids" means that the batter mixture does not comprise a significant amount of hydrocolloids. A "significant amount" of a given hydrocolloid in a batter mixture means that the percentage of the given hydrocolloid is at least 0.01% (w/w) of the dry weight in the batter mixture.

In one aspect, a batter mixture used in the methods and compositions disclosed herein is free of xanthan gum. In another aspect, a batter mixture used in the methods and compositions disclosed herein is free of dextrin. In one aspect, a batter mixture used in the methods and compositions disclosed herein does not comprise any xanthan gum. In another aspect, a batter mixture used in the methods and compositions disclosed herein does not comprise any dextrin.

The present disclosure provides method for preparing a batter mixture free of hydrocolloids, comprising (a) providing a pregelatinized pea starch, wherein the pregelatinized pea starch has a granulometry characterized by a "n" value and a "d" value according to German norm DIN 66145, wherein the "n" value is from 1.2 to 1.8 and the "d" value is from 80 to 150 $\mu$m; and (b) mixing the pregelatinized pea starch into a batter mixture, where the percentage of the pregelatinized pea starch is from 1 to 10% (w/w) of the dry weight in the batter mixture, and where the batter mixture does not comprise a hydrocolloid.

In one aspect, the present disclosure provides the method for making the batter mix free of hydrocolloids comprising

a) providing the pregelatinized pea starch, where the granulometry is characterized by a "n" value and "d" value according to German norm DIN 66145, wherein the "n" value is from 1.2 to 1.8 and the "d" value is from 100 to 120 $\mu$m;
b) mixing the pregelatinized pea starch with wheat flour to make a batter mix, where the pregelatinized pea starch comprises from 1 to 7% (w/w) of the dry weight in the batter mix,
where combined pregelatinized pea starch and wheat flour constitutes 92 to 94% of the dry weight in the batter mix;
c) providing 4 to 6% (w/w) of salt, 0.5 to 1.5% (w/w) of sodium acid pyrophosphate, 0.6 to 1% (w/w) of sodium bicarbonate, and 0.6 to 1% (w/w) of dextrose to the batter mix; and
d) providing water at 7°C to the batter mix, where the ratio of water to dry ingredients in the batter mix is 3:2 (w/w), where the water and the dry ingredients is mixed for 8 to 12 minutes and maintained at 16 to 20.5°C .

In one aspect, the percentage of the pregelatinized pea starch used in the methods and compositions disclosed herein is from 1 to 1.5% (w/w), 1.5 to 2% (w/w), 2 to 2.5% (w/w), 2.5 to 3% (w/w), 3 to 3.5% (w/w), 3.5 to 4% (w/w), 4 to 4.5% (w/w), 4.5 to 5% (w/w), 5 to 5.5% (w/w), 5.5 to 6% (w/w), 6 to 6.5% (w/w), 6.5 to 7% (w/w), 7 to 7.5% (w/w), 7.5 to 8% (w/w), 8 to 8.5% (w/w), 8.5 to 9% (w/w), 9 to 9.5% (w/w), or 9.5 to 10% (w/w) of the dry weight in the batter mixture.

In one aspect, the percentage of the pregelatinized pea starch used in the methods and compositions disclosed herein is from about 1 to about 1.5%, from about 1 to about 2%, from about 1 to about 2.5%, from about 1 to about 3%, from about 1 to about 3.5%, from about 1 to about 4%, from about 1 to about 4.5%, from about 1 to about 5%, from about 1 to about 5.5%, from about 1 to about 6%, from about 1 to about 6.5%, from about 1 to about 7%, from about 1 to about 7.5%, from about 1 to about 8%, from about 1 to about 8.5%, from about 1 to about 9%, from about 1 to about 9.5%, from about 1 to about 10%, from about 1.5 to about 2%, from about 1.5 to about 2.5%, from about 1.5 to about 3%, from about 1.5 to about 3.5%, from about 1.5 to about 4%, from about 1.5 to about 4.5%, from about 1.5 to about 5%, from about 1.5 to about 5.5%, from about 1.5 to about 6%, from about 1.5 to about 6.5%, from about 1.5 to about 7%, from about 1.5 to about 7.5%, from about 1.5 to about 8%, from about 1.5 to about 8.5%, from about 1.5 to about 9%, from about 1.5 to about 9.5%, from about 1.5 to about 10%, from about 2 to about 2.5%, from about 2 to about 3%, from about 2 to about 3.5%, from about 2 to about 4%, from about 2 to about 4.5%, from about 2 to about 5%, from about 2 to about 5.5%, from about 2 to about 6%, from about 2 to about 6.5%, from about 2 to about 7%, from about 2 to about 7.5%, from about 2 to about 8%, from about 2 to about 8.5%, from about 2 to about 9%, from about 2 to about 9.5%, from about 2 to about 10%, from about 2.5 to about 3%, from about 2.5 to about 3.5%, from about 2.5 to about 4%, from about 2.5 to about 4.5%, from about 2.5 to about 5%, from about 2.5 to about 5.5%, from about 2.5 to about 6%, from about 2.5 to about 6.5%, from about 2.5 to about 7%, from about 2.5 to about 7.5%, from about 2.5 to about 8%, from about 2.5 to about 8.5%, from about 2.5 to about 9%, from about 2.5 to about 9.5%, from about 2.5 to about 10%, from about 3 to about 3.5%, from about 3 to about 4%, from about 3 to about 4.5%, from about 3 to about 5%, from about 3 to about 5.5%, from about 3 to about 6%, from about 3 to about 6.5%, from about 3 to about 7%, from about 3 to about 7.5%, from about 3 to about 8%, from about 3 to about 8.5%, from about 3 to about 9%, from about 3 to about 9.5%, from about 3 to about 10%, from about 3.5 to about 4%, from about 3.5 to about 4.5%, from about 3.5 to about 5%, from about 3.5 to about 5.5%, from about 3.5 to about 6%, from about 3.5 to about 6.5%, from about 3.5 to about 7%, from about 3.5 to about 7.5%, from about 3.5 to about 8%, from about 3.5 to about 8.5%, from about 3.5 to about 9%, from about 3.5 to about 9.5%, from about 3.5 to about 10%, from about 4 to about 4.5%, from 4 to about 5%, from about 4 to about 5.5%, from about 4 to about 6%, from about 4 to about 6.5%, from about 4 to about 7%, from about 4 to about 7.5%, from about 4 to about 8%, from about 4 to about 8.5%, from about 4 to about 9%, from about 4 to about 9.5%, from about 4 to about 10%, from about 4.5 to about 5%, from about 4.5 to about 5.5%, from about 4.5 to about 6%, from about 4.5 to about 6.5%, from about 4.5 to about 7%, from about 4.5 to about 7.5%, from about 4.5 to about 8%, from about 4.5 to about 8.5%, from about 4.5 to about 9%, from about 4.5 to about 9.5%, from about 4.5 to about 10%, from about 5 to about 5.5%, from about 5 to about 6%, from about 5 to about 6.5%, from about 5 to about 7%, from about 5 to about 7.5%, from about 5 to about 8%, from about 5 to about 8.5%, from about 5 to about 9%, from about 5 to about 9.5%, from about 5 to about 10%, from about 5.5 to about 6%, from about 5.5 to about 6.5%, from about 5.5 to about 7%, from about 5.5 to about 7.5%, from about 5.5 to about 8%, from about 5.5 to about 8.5%, from about 5.5 to about 9%, from about 5.5 to about 9.5%, from about 5.5 to about 10%, from about 6 to about 6.5%, from about 6 to about 7%, from about 6 to about 7.5%, from about 6 to about 8%, from about 6 to about 8.5%, from about 6 to about 9%, from about 6 to about 9.5%, from about 6 to about 10%, from about 6.5 to about 7%, from about 6.5 to about 7.5%, from about 6.5 to about 8%, from about 6.5 to about 8.5%, from about 6.5 to about 9%, from about 6.5 to about 9.5%, from about 6.5 to about 10%, from about 7 to about 7.5%, from about 7 to about 8%, from about 7 to about 8.5%, from about 7 to about 9%, from about 7 to about 9.5%, from about 7 to about 10%, from about 7.5 to about 8%, from about 7.5 to about 8.5%, from about 7.5 to about 9%, from about 7.5 to about 9.5%, from about 7.5 to about 10%, from about 8 to about 8.5%, from about 8 to about 9%, from about 8 to about 9.5%, from about 8 to about 10%, from about 8.5 to about 9%, from about 8.5 to about 9.5%, from about 8.5 to about 10%, from about 9 to about 9.5%, from about 9 to about 10%, or from about 9.5 to about 10% (w/w) of the dry weight in the batter mixture.

In one aspect, the percentage of the pregelatinized pea starch used in the methods and compositions disclosed herein is about 1%, about 1.5%, about 2%, about 2.5%, about 3%, about 3.5%, about 4%, about 4.5%, about 5%, about 5.5%, about 6%, about 6.5%, about 7%, about 7.5%, about 8%, about 8.5%, about 9%, about 9.5%, or about 10% (w/w) of the dry weight in the batter mixture.

In one aspect, the percentage of the pregelatinized pea starch used in the methods and compositions disclosed herein is from about 4.5 to about 7.5% (w/w) of the dry weight in the batter mixture. In another aspect, the percentage of the pregelatinized pea starch used in the methods and compositions disclosed herein is from about 5 to about 7% (w/w) of the dry weight in the batter mixture.

In one aspect, the batter mixture used in the methods and compositions disclosed herein further comprises one or more flours. In one aspect, the one of more flours are selected from the group consisting of wheat flour, corn flour, rice flour, potato flour, oat flour, and any combination thereof.

In one aspect, the combined percentage of the one or more flours in a batter mixture described herein is from about 80 to about 95% (w/w) of the dry weight in the batter mixture. In one aspect, the combined percentage of the one or more flours in a batter mixture is from about 80 to about 85%, from about 85 to about 90%, or from about 90 to about 95% (w/w) of the dry weight in the batter mixture. In one aspect, the combined percentage of the one or more flours in a batter mixture is about 80%, about 81%, about 82%, about 83%, about 84%, about 85%, about 86%, about 87%, about 88%, about 89%, about 90%, about 91%, about 92%, about 93%, about 94%, or about 95% (w/w) of the dry weight in the batter mixture.

In one aspect, the batter mixture used in the methods and compositions described herein further comprises wheat flour. In one aspect, the percentage of the wheat flour is from about 80 to about 95% (w/w) of the dry weight in the batter mixture. In one aspect, the percentage of the wheat flour is from about 80 to about 85%, from about 85 to about 90%, or from about 90 to about 95% (w/w) of the dry weight in the batter mixture. In one aspect, the percentage of the wheat flour is about 80%, about 81%, about 82%, about 83%, about 84%, about 85%, about 86%, about 87%, about 88%, about 89%, about 90%, about 91%, about 92%, about 93%, about 94%, or about 95% (w/w) of the dry weight in the batter mixture. In another aspect, the percentage of the wheat flour is from about 0 to about 5%, about 5 to about 10%, about 10 to about 15%, about 15 to about 20%, about 20 to about 25%, about 25 to about 30%, about 30 to about 35%, about 35 to about 40%, about 40 to about 45%, about 45 to about 50%, about 50 to about 55%, about 55 to about 60%, about 60 to about 65%, about 65 to about 70%, about 70 to about 75%, or about 75 to about 80% (w/w) of the dry weight in the batter mixture.

In one aspect, the batter mixture used in the methods and compositions described herein further comprises corn flour. In one aspect, the percentage of the corn flour is from about 80 to about 95% (w/w) of the dry weight in the batter mixture. In one aspect, the percentage of the corn flour is from about 80 to about 85%, from about 85 to about 90%, or from about 90 to about 95% (w/w) of the dry weight in the batter mixture. In one aspect, the percentage of the corn flour is about 80%, about 81%, about 82%, about 83%, about 84%, about 85%, about 86%, about 87%, about 88%, about 89%, about 90%, about 91%, about 92%, about 93%, about 94%, or about 95% (w/w) of the dry weight in the batter mixture. In another aspect, the percentage of the corn flour is from about 0 to about 5%, about 5 to about 10%, about 10 to about 15%, about 15 to about 20%, about 20 to about 25%, about 25 to about 30%, about 30 to about 35%, about 35 to about 40%, about 40 to about 45%, about 45 to about 50%, about 50 to about 55%, about 55 to about 60%, about 60 to about 65%, about 65 to about 70%, about 70 to about 75%, or about 75 to about 80% (w/w) of the dry weight in the batter mixture.

In one aspect, the batter mixture used in the methods and compositions described herein further comprises rice flour. In one aspect, the percentage of the rice flour is from about 80 to about 95% (w/w) of the dry weight in the batter mixture. In one aspect, the percentage of the rice flour is from about 80 to about 85%, from about 85 to about 90%, or from about 90 to about 95% (w/w) of the dry weight in the batter mixture. In one aspect, the percentage of the rice flour is about 80%, about 81%, about 82%, about 83%, about 84%, about 85%, about 86%, about 87%, about 88%, about 89%, about 90%, about 91%, about 92%, about 93%, about 94%, or about 95% (w/w) of the dry weight in the batter mixture. In another aspect, the percentage of the rice flour is from about 0 to about 5%, about 5 to about 10%, about 10 to about 15%, about 15 to about 20%, about 20 to about 25%, about 25 to about 30%, about 30 to about 35%, about 35 to about 40%, about 40 to about 45%, about 45 to about 50%, about 50 to about 55%, about 55 to about 60%, about 60 to about 65%, about 65 to about 70%, about 70 to about 75%, or about 75 to about 80% (w/w) of the dry weight in the batter mixture.

In one aspect, the batter mixture used in the methods and compositions described herein further comprises potato flour. In one aspect, the percentage of the potato flour is from about 80 to about 95% (w/w) of the dry weight in the batter mixture. In one aspect, the percentage of the potato flour is from about 80 to about 85%, from about 85 to about 90%, or from about 90 to about 95% (w/w) of the dry weight in the batter mixture. In one aspect, the percentage of the potato flour is about 80%, about 81%, about 82%, about 83%, about 84%, about 85%, about 86%, about 87%, about 88%, about 89%, about 90%, about 91%, about 92%, about 93%, about 94%, or about 95% (w/w) of the dry weight in the batter mixture. In another aspect, the percentage of the potato flour is from about 0 to about 5%, about 5 to about 10%, about 10 to about 15%, about 15 to about 20%, about 20 to about 25%, about 25 to about 30%, about 30 to about 35%, about 35 to about 40%, about 40 to about 45%, about 45 to about 50%, about 50 to about 55%, about 55 to about 60%, about 60 to about 65%, about 65 to about 70%, about 70 to about 75%, or about 75 to about 80% (w/w) of the dry weight in the batter mixture.

In one aspect, the batter mixture used in the methods and compositions described herein further comprises oat flour. In one aspect, the percentage of the oat flour is from about 80 to about 95% (w/w) of the dry weight in the batter mixture. In one aspect, the percentage of the oat flour is from about 80 to about 85%, from about 85 to about 90%, or from about 90 to about 95% (w/w) of the dry weight in the batter mixture. In one aspect, the percentage of the oat flour is about 80%, about 81%, about 82%, about 83%, about 84%, about 85%, about 86%, about 87%, about 88%, about 89%, about 90%, about 91%, about 92%, about 93%, about 94%, or about 95% (w/w) of the dry weight in the batter mixture. In another aspect, the percentage of the oat flour is from about 0 to about 5%, about 5 to about 10%, about 10 to about 15%, about 15 to about 20%, about 20 to about 25%, about 25 to about 30%, about 30 to about 35%, about 35 to about 40%, about 40 to about 45%, about 45 to about 50%, about 50 to about 55%, about 55 to about 60%, about 60 to about 65%, about 65 to about 70%, about 70 to about 75%, or about 75 to about 80% (w/w) of the dry weight in the batter mixture.

In one aspect, the batter mixture used in the methods and compositions disclosed herein further comprises one or more leavening agents. In one aspect, the one of more leavening agents are selected from the group consisting of baking powder, baking soda, yeast, and any combination thereof. In one aspect, the combined percentage of the one or more leavening agents is from about 0.5% to about 5% (w/w) of the dry weight in the batter mixture. In one aspect, the combined percentage of the one or more leavening agents is from about 0.5 to about 1%, from about 1 to about 1.5%, from about 1.5 to about 2%, from about 2 to about 2.5%, from about 2.5 to about 3%, from about 3 to about 3.5%, from about 3.5 to about 4%, from about 4 to about 4.5%, or from about 4.5 to about 5% (w/w) of the dry weight in the batter mixture. In one aspect, the combined percentage of the one or more leavening agents is from about 0.5 to about 1%, from about 0.5 to about 1.5%, from about 0.5 to about 2%, from about 0.5 to about 2.5%, from about 0.5 to about 3%, from about 0.5 to about 3.5%, from about 0.5 to about 4%, from about 0.5 to about 4.5%, from about 0.5 to about 5%, from about 1 to about 1.5%, from about 1 to about 2%, from about 1 to about 2.5%, from about 1 to about 3%, from about 1 to about 3.5%, from about 1 to about 4%, from about 1 to about 4.5%, from about 1 to about 5%, from about 1.5 to about 2%, from about 1.5 to about 2.5%, from about 1.5 to about 3%, from about 1.5% to about 3.5%, from about 1.5 to about 4%, from about 1.5 to about 4.5%, from about 1.5 to about 5%, from about 2 to about 2.5%, from about 2 to about 3%, from about 2 to about 3.5%, from about 2 to about 4%, from about 2 to about 4.5%, from about 2 to about 5%, from about 2.5 to about 3%, from about 2.5 to about 3.5%, from about 2.5 to about 4%, from about 2.5 to about 4.5%, from about 2.5 to about 5%, from about 3 to about 3.5%, from about 3 to about 4%, from about 3 to about 4.5%, from about 3 to about 5%, from about 3.5 to about 4%, from about 3.5 to about 4.5%, from about 3.5 to about 5%, from about 4 to about 4.5%, or from about 4.5 to about 5% (w/w) of the dry weight in the batter mixture. In one aspect, the combined percentage of the one or more leavening agents is about 0.5%, about 1%, about 1.5%, about 2%, about 2.5%, about 3%, about 3.5%, about 4%, about 4.5%, or about 5% (w/w) of the dry weight in the batter mixture.

In one aspect, the one or more leavening agents comprise baking powder. In one aspect, the percentage of the baking powder is from about 0.5 to about 1%, from about 1 to about 1.5%, from about 1.5 to about 2%, from about 2 to about 2.5%, from about 2.5 to about 3%, from about 3 to about 3.5%, from about 3.5 to about 4%, from about 4 to about 4.5%, or from about 4.5 to about 5% (w/w) of the dry weight in the batter mixture. In one aspect, the percentage of the baking powder is from about 0.5 to about 1%, from about 0.5 to about 1.5%, from about 0.5 to about 2%, from about 0.5 to about 2.5%, from about 0.5 to about 3%, from about 0.5 to about 3.5%, from about 0.5 to about 4%, from about 0.5 to about 4.5%, from about 0.5 to about 5%, from about 1 to about 1.5%, from about 1 to about 2%, from about 1 to about 2.5%, from about 1 to about 3%, from about 1 to about 3.5%, from about 1 to about 4%, from about 1 to about 4.5%, from about 1 to about 5%, from about 1.5 to about 2%, from about 1.5 to about 2.5%, from about 1.5 to about 3%, from about 1.5% to about 3.5%, from about 1.5 to about 4%, from about 1.5 to about 4.5%, from about 1.5 to about 5%, from about 2 to about 2.5%, from about 2 to about 3%, from about 2 to about 3.5%, from about 2 to about 4%, from about 2 to about 4.5%, from about 2 to about 5%, from about 2.5 to about 3%, from about 2.5 to about 3.5%, from about 2.5 to about 4%, from about 2.5 to about 4.5%, from about 2.5 to about 5%, from about 3 to about 3.5%, from about 3 to about 4%, from about 3 to about 4.5%, from about 3 to about 5%, from about 3.5 to about 4%, from about 3.5 to about 4.5%, from about 3.5 to about 5%, from about 4 to about 4.5%, or from about 4.5 to about 5% (w/w) of the dry weight in the batter mixture. In one aspect, the percentage of the baking powder is about 0.5%, about 1%, about 1.5%, about 2%, about 2.5%, about 3%, about 3.5%, about 4%, about 4.5%, or about 5% (w/w) of the dry weight in the batter mixture.

In one aspect, the one or more leavening agents comprise baking soda. In one aspect, the percentage of the baking soda is from about 0.5 to about 1%, from about 1 to about 1.5%, from about 1.5 to about 2%, from about 2 to about 2.5%, from about 2.5 to about 3%, from about 3 to about 3.5%, from about 3.5 to about 4%, from about 4 to about 4.5%, or from about 4.5 to about 5% (w/w) of the dry weight in the batter mixture. In one aspect, the percentage of the baking soda is from about 0.5 to about 1%, from about 0.5 to about 1.5%, from about 0.5 to about 2%, from about 0.5 to about 2.5%, from about 0.5 to about 3%, from about 0.5 to about 3.5%, from about 0.5 to about 4%, from about 0.5 to about 4.5%, from about 0.5 to about 5%, from about 1 to about 1.5%, from about 1 to about 2%, from about 1 to about 2.5%, from about 1 to about 3%, from about 1 to about 3.5%, from about 1 to about 4%, from about 1 to about 4.5%, from about 1 to about 5%, from about 1.5 to about 2%, from about 1.5 to about 2.5%, from about 1.5 to about 3%, from about 1.5% to about 3.5%, from about 1.5 to about 4%, from about 1.5 to about 4.5%, from about 1.5 to about 5%, from about 2 to about 2.5%, from about 2 to about 3%, from about 2 to about 3.5%, from about 2 to about 4%, from about 2 to about 4.5%, from about 2 to about 5%, from about 2.5 to about 3%, from about 2.5 to about 3.5%, from about 2.5 to about 4%, from about 2.5 to about 4.5%, from about 2.5 to about 5%, from about 3 to about 3.5%, from about 3 to about 4%, from about 3 to about 4.5%, from about 3 to about 5%, from about 3.5 to about 4%, from about 3.5 to about 4.5%, from about 3.5 to about 5%, from about 4 to about 4.5%, or from about 4.5 to about 5% (w/w) of the dry weight in the batter mixture. In one aspect, the percentage of the baking soda is about 0.5%, about 1%, about 1.5%, about 2%, about 2.5%, about 3%, about 3.5%, about 4%, about 4.5%, or about 5% (w/w) of the dry weight in the batter mixture.

In one aspect, the one or more leavening agents comprise yeast. In one aspect, the percentage of the yeast is from about 0.5 to about 1%, from about 1 to about 1.5%, from about 1.5 to about 2%, from about 2 to about 2.5%, from about 2.5 to about 3%, from about 3 to about 3.5%, from about 3.5 to about 4%, from about 4 to about 4.5%, or from about 4.5 to about 5% (w/w) of the dry weight in the batter mixture. In one aspect, the percentage of the yeast is from about 0.5 to about 1%, from about 0.5 to about 1.5%, from about 0.5 to about 2%, from about 0.5 to about 2.5%, from about 0.5 to about 3%, from about 0.5 to about 3.5%, from about 0.5 to about 4%, from about 0.5 to about 4.5%, from about 0.5 to about 5%, from about 1 to about 1.5%, from about 1 to about 2%, from about 1 to about 2.5%, from about 1 to about 3%, from about 1 to about 3.5%, from about 1 to about 4%, from about 1 to about 4.5%, from about 1 to about 5%, from about 1.5 to about 2%, from about 1.5 to about 2.5%, from about 1.5 to about 3%, from about 1.5% to about 3.5%, from about 1.5 to about 4%, from about 1.5 to about 4.5%, from about 1.5 to about 5%, from about 2 to about 2.5%, from about 2 to about 3%, from about 2 to about 3.5%, from about 2 to about 4%, from about 2 to about 4.5%, from about 2 to about 5%, from about 2.5 to about 3%, from about 2.5 to about 3.5%, from about 2.5 to about 4%, from about 2.5 to about 4.5%, from about 2.5 to about 5%, from about 3 to about 3.5%, from about 3 to about 4%, from about 3 to about 4.5%, from about 3 to about 5%, from about 3.5 to about 4%, from about 3.5 to about 4.5%, from about 3.5 to about 5%, from about 4 to about 4.5%, or from about 4.5 to about 5% (w/w) of the dry weight in the batter mixture. In one aspect, the percentage of the yeast is about 0.5%, about 1%, about 1.5%, about 2%, about 2.5%, about 3%, about 3.5%, about 4%, about 4.5%, or about 5% (w/w) of the dry weight in the batter mixture.

In one aspect, the batter mixture used in the methods and compositions disclosed herein further comprises one or more flavoring agents. In one aspect, the one of more flavoring agents are selected from the group consisting of salt, sucrose, dextrose, spices, and any combination thereof. In one aspect, the combined percentage of the one or more flavoring agents is from about 0.5 to about 10% (w/w) of the dry weight in the batter mixture. In one aspect, the combined percentage of the one or more flavoring agents is from about 0.5 to about 1%, from about 1 to about 1.5%, from about 1.5 to about 2%, from about 2 to about 2.5%, from about 2.5 to about 3%, from about 3 to about 3.5%, from about 3.5 to about 4%, from about 4 to about 4.5%, from about 4.5 to about 5%, about from 5 to about 5.5%, from about 5.5 to about 6%, from about 6 to about 6.5%, from about 6.5 to about 7%, from about 7 to about 7.5%, from about 7.5 to about 8%, from about 8 to about 8.5%, from about 8.5 to about 9%, from about 9 to about 9.5%, or from about 9.5 to about 10% (w/w) of the dry weight in the batter mixture. In one aspect, the combined percentage of the one or more flavoring agents is from about 0.5 to about 1%, from about 0.5 to about 1.5%, from about 0.5 to about 2%, from about 0.5 to about 2.5%, from about 0.5 to about 3%, from about 0.5 to about 3.5%, from about 0.5 to about 4%, from about 0.5 to about 4.5%, from about 0.5 to about 5%, from about 0.5 to about 5.5%, from about 0.5 to about 6%, from about 0.5 to about 6.5%, from about 0.5 to about 7%, from about 0.5 to about 7.5%, from about 0.5 to about 8%, from about 0.5 to about 8.5%, from about 0.5 to about 9%, from about 0.5 to about 9.5%, from about 0.5 to about 10%, from about 1 to about 1.5%, from about 1 to about 2%, from about 1 to about 2.5%, from about 1 to about 3%, from about 1 to about 3.5%, from about 1 to about 4%, from about 1 to about 4.5%, from about 1 to about 5%, from about 1 to about 5.5%, from about 1 to about 6%, from about 1 to about 6.5%, from about 1 to about 7%, from about 1 to about 7.5%, from about 1 to about 8%, from about 1 to about 8.5%, from about 1 to about 9%, from about 1 to about 9.5%, from about 1 to about 10%, from about 1.5 to about 2%, from about 1.5 to about 2.5%, from about 1.5 to about 3%, from about 1.5% to about 3.5%, from about 1.5 to about 4%, from about 1.5 to about 4.5%, from about 1.5 to about 5%, from about 1.5 to about 5.5%, from about 1.5 to about 6%, from about 1.5 to about 6.5%, from about 1.5 to about 7%, from about 1.5 to about 7.5%, from about 1.5 to about 8%, from about 1.5 to about 8.5%, from about 1.5 to about 9%, from about 1.5 to about 9.5%, from about 1.5 to about 10%, from about 2 to about 2.5%, from about 2 to about 3%, from about 2 to about 3.5%, from about 2 to about 4%, from about 2 to about 4.5%, from about 2 to about 5%, from about 2 to about 5.5%, from about 2 to about 6%, from about 2 to about 6.5%, from about 2 to about 7%, from about 2 to about 7.5%, from about 2 to about 8%, from about 2 to about 8.5%, from about 2 to about 9%, from about 2 to about 9.5%, from about 2 to about 10%, from about 2.5 to about 3%, from about 2.5 to about 3.5%, from about 2.5 to about 4%, from about 2.5 to about 4.5%, from about 2.5 to about 5%, from about 2.5 to about 5.5%, from about 2.5 to about 6%, from about 2.5 to about 6.5%, from about 2.5 to about 7%, from about 2.5 to about 7.5%, from about 2.5 to about 8%, from about 2.5 to about 8.5%, from about 2.5 to about 9%, from about 2.5 to about 9.5%, from about 2.5 to about 10%, from about 3 to about 3.5%, from about 3 to about 4%, from about 3 to about 4.5%, from about 3 to about 5%, from about 3 to about 5.5%, from about 3 to about 6%, from about 3 to about 6.5%, from about 3 to about 7%, from about 3 to about 7.5%, from about 3 to about 8%, from about 3 to about 8.5%, from about 3 to about 9%, from about 3 to about 9.5%, from about 3 to about 10%, from about 3.5 to about 4%, from about 3.5 to about 4.5%, from about 3.5 to about 5%, from about 3.5 to about 5.5%, from about 3.5 to about 6%, from about 3.5 to about 6.5%, from about 3.5 to about 7%, from about 3.5 to about 7.5%, from about 3.5 to about 8%, from about 3.5 to about 8.5%, from about 3.5 to about 9%, from about 3.5 to about 9.5%, from about 3.5 to about 10%, from about 4 to about 4.5%, from 4 to about 5%, from about 4 to about 5.5%, from about 4 to about 6%, from about 4 to about 6.5%, from about 4 to about 7%, from about 4 to about 7.5%, from about 4 to about 8%, from about 4 to about 8.5%, from about 4 to about 9%, from about 4 to about 9.5%, from about 4 to about 10%, from about 4.5 to about 5%, from about 4.5 to about 5.5%, from about 4.5 to about 6%, from about 4.5 to about 6.5%, from about 4.5 to about 7%, from about 4.5 to about 7.5%, from about 4.5 to about 8%, from about 4.5 to about 8.5%, from about 4.5 to about 9%, from about 4.5 to about 9.5%, from about 4.5 to about 10%, from about 5 to about 5.5%, from about 5 to about 6%, from about 5 to about 6.5%, from about 5 to about 7%, from about 5 to about 7.5%, from about 5 to about 8%, from about 5 to about 8.5%, from about 5 to about 9%, from about 5 to about 9.5%, from about 5 to about 10%, from about 5.5 to about 6%, from about 5.5 to about 6.5%, from about 5.5 to about 7%, from about 5.5 to about 7.5%, from about 5.5 to about 8%, from about 5.5 to about 8.5%, from about 5.5 to about 9%, from about 5.5 to about 9.5%, from about 5.5 to about 10%, from about 6 to about 6.5%, from about 6 to about 7%, from about 6 to about 7.5%, from about 6 to about 8%, from about 6 to about 8.5%, from about 6 to about 9%, from about 6 to about 9.5%, from about 6 to about 10%, from about 6.5 to about 7%, from about 6.5 to about 7.5%, from about 6.5 to about 8%, from about 6.5 to about 8.5%, from about 6.5 to about 9%, from about 6.5 to about 9.5%, from about 6.5 to about 10%, from about 7 to about 7.5%, from about 7 to about 8%, from about 7 to about 8.5%, from about 7 to about 9%, from about 7 to about 9.5%, from about 7 to about 10%, from about 7.5 to about 8%, from about 7.5 to about 8.5%, from about 7.5 to about 9%, from about 7.5 to about 9.5%, from about 7.5 to about 10%, from about 8 to about 8.5%, from about 8 to about 9%, from about 8 to about 9.5%, from about 8 to about 10%, from about 8.5 to about 9%, from about 8.5 to about 9.5%, from about 8.5 to about 10%, from about 9 to about 9.5%, from about 9 to about 10%, or from about 9.5 to about 10% (w/w) of the dry weight in the batter mixture. In one aspect, the combined percentage of the one or more flavoring agents is about 0.5%, about 1%, about 1.5%, about 2%, about 2.5%, about 3%, about 3.5%, about 4%, about 4.5%, about 5%, about 5.5%, about 6%, about 6.5%, about 7%, about 7.5%, about 8%, about 8.5%, about 9%, about 9.5%, or about 10% (w/w) of the dry weight in the batter mixture.

In one aspect, the one or more flavoring agents comprise salt. In one aspect, the percentage of the salt is from about 0.5 to about 1%, from about 1 to about 1.5%, from about 1.5 to about 2%, from about 2 to about 2.5%, from about 2.5 to about 3%, from about 3 to about 3.5%, from about 3.5 to about 4%, from about 4 to about 4.5%, or from about 4.5 to about 5% (w/w) of the dry weight in the batter mixture. In one aspect, the percentage of the salt is from about 0.5 to about 1%, from about 0.5 to about 1.5%, from about 0.5 to about 2%, from about 0.5 to about 2.5%, from about 0.5 to about 3%, from about 0.5 to about 3.5%, from about 0.5 to about 4%, from about 0.5 to about 4.5%, from about 0.5 to about 5%, from about 1 to about 1.5%, from about 1 to about 2%, from about 1 to about 2.5%, from about 1 to about 3%, from about 1 to about 3.5%, from about 1 to about 4%, from about 1 to about 4.5%, from about 1 to about 5%, from about 1.5 to about 2%, from about 1.5 to about 2.5%, from about 1.5 to about 3%, from about 1.5% to about 3.5%, from about 1.5 to about 4%, from about 1.5 to about 4.5%, from about 1.5 to about 5%, from about 2 to about 2.5%, from about 2 to about 3%, from about 2 to about 3.5%, from about 2 to about 4%, from about 2 to about 4.5%, from about 2 to about 5%, from about 2.5 to about 3%, from about 2.5 to about 3.5%, from about 2.5 to about 4%, from about 2.5 to about 4.5%, from about 2.5 to about 5%, from about 3 to about 3.5%, from about 3 to about 4%, from about 3 to about 4.5%, from about 3 to about 5%, from about 3.5 to about 4%, from about 3.5 to about 4.5%, from about 3.5 to about 5%, from about 4 to about 4.5%, or from about 4.5 to about 5% (w/w) of the dry weight in the batter mixture. In one aspect, the percentage of the salt is about 0.5%, about 1%, about 1.5%, about 2%, about 2.5%, about 3%, about 3.5%, about 4%, about 4.5%, or about 5% (w/w) of the dry weight in the batter mixture.

In one aspect, the one or more flavoring agents comprise sucrose. In one aspect, the percentage of the sucrose is from about 0.5 to about 1%, from about 1 to about 1.5%, from about 1.5 to about 2%, from about 2 to about 2.5%, from about 2.5 to about 3%, from about 3 to about 3.5%, from about 3.5 to about 4%, from about 4 to about 4.5%, or from about 4.5 to about 5% (w/w) of the dry weight in the batter mixture. In one aspect, the percentage of the sucrose is from about 0.5 to about 1%, from about 0.5 to about 1.5%, from about 0.5 to about 2%, from about 0.5 to about 2.5%, from about 0.5 to about 3%, from about 0.5 to about 3.5%, from about 0.5 to about 4%, from about 0.5 to about 4.5%, from about 0.5 to about 5%, from about 1 to about 1.5%, from about 1 to about 2%, from about 1 to about 2.5%, from about 1 to about 3%, from about 1 to about 3.5%, from about 1 to about 4%, from about 1 to about 4.5%, from about 1 to about 5%, from about 1.5 to about 2%, from about 1.5 to about 2.5%, from about 1.5 to about 3%, from about 1.5% to about 3.5%, from about 1.5 to about 4%, from about 1.5 to about 4.5%, from about 1.5 to about 5%, from about 2 to about 2.5%, from about 2 to about 3%, from about 2 to about 3.5%, from about 2 to about 4%, from about 2 to about 4.5%, from about 2 to about 5%, from about 2.5 to about 3%, from about 2.5 to about 3.5%, from about 2.5 to about 4%, from about 2.5 to about 4.5%, from about 2.5 to about 5%, from about 3 to about 3.5%, from about 3 to about 4%, from about 3 to about 4.5%, from about 3 to about 5%, from about 3.5 to about 4%, from about 3.5 to about 4.5%, from about 3.5 to about 5%, from about 4 to about 4.5%, or from about 4.5 to about 5% (w/w) of the dry weight in the batter mixture. In one aspect, the percentage of the sucrose is about 0.5%, about 1%, about 1.5%, about 2%, about 2.5%, about 3%, about 3.5%, about 4%, about 4.5%, or about 5% (w/w) of the dry weight in the batter mixture.

In one aspect, the one or more flavoring agents comprise dextrose. In one aspect, the percentage of the dextrose is from about 0.5 to about 1%, from about 1 to about 1.5%, from about 1.5 to about 2%, from about 2 to about 2.5%, from about 2.5 to about 3%, from about 3 to about 3.5%, from about 3.5 to about 4%, from about 4 to about 4.5%, or from about 4.5 to about 5% (w/w) of the dry weight in the batter mixture. In one aspect, the percentage of the dextrose is from about 0.5 to about 1%, from about 0.5 to about 1.5%, from about 0.5 to about 2%, from about 0.5 to about 2.5%, from about 0.5 to about 3%, from about 0.5 to about 3.5%, from about 0.5 to about 4%, from about 0.5 to about 4.5%, from about 0.5 to about 5%, from about 1 to about 1.5%, from about 1 to about 2%, from about 1 to about 2.5%, from about 1 to about 3%, from about 1 to about 3.5%, from about 1 to about 4%, from about 1 to about 4.5%, from about 1 to about 5%, from about 1.5 to about 2%, from about 1.5 to about 2.5%, from about 1.5 to about 3%, from about 1.5% to about 3.5%, from about 1.5 to about 4%, from about 1.5 to about 4.5%, from about 1.5 to about 5%, from about 2 to about 2.5%, from about 2 to about 3%, from about 2 to about 3.5%, from about 2 to about 4%, from about 2 to about 4.5%, from about 2 to about 5%, from about 2.5 to about 3%, from about 2.5 to about 3.5%, from about 2.5 to about 4%, from about 2.5 to about 4.5%, from about 2.5 to about 5%, from about 3 to about 3.5%, from about 3 to about 4%, from about 3 to about 4.5%, from about 3 to about 5%, from about 3.5 to about 4%, from about 3.5 to about 4.5%, from about 3.5 to about 5%, from about 4 to about 4.5%, or from about 4.5 to about 5% (w/w) of the dry weight in the batter mixture. In one aspect, the percentage of the dextrose is about 0.5%, about 1%, about 1.5%, about 2%, about 2.5%, about 3%, about 3.5%, about 4%, about 4.5%, or about 5% (w/w) of the dry weight in the batter mixture.

In one aspect, the batter mixture used in the methods and compositions disclosed herein further comprises one or more buffering agents. In one aspect, the one of more buffering agents comprise sodium acid pyrophosphate. In one aspect, the combined percentage of the one or more buffering agents is from about 0.5 to about 5% (w/w) of the dry weight in the batter mixture. In one aspect, the combined percentage of the one or more buffering agents is from about 0.5 to about 1%, from about 1 to about 1.5%, from about 1.5 to about 2%, from about 2 to about 2.5%, from about 2.5 to about 3%, from about 3 to about 3.5%, from about 3.5 to about 4%, from about 4 to about 4.5%, or from about 4.5 to about 5% (w/w) of the dry weight in the batter mixture. In one aspect, the combined percentage of the one or more leavening agents is from about 0.5 to about 1%, from about 0.5 to about 1.5%, from about 0.5 to about 2%, from about 0.5 to about 2.5%, from about 0.5 to about 3%, from about 0.5 to about 3.5%, from about 0.5 to about 4%, from about 0.5 to about 4.5%, from about 0.5 to about 5%, from about 1 to about 1.5%, from about 1 to about 2%, from about 1 to about 2.5%, from about 1 to about 3%, from about 1 to about 3.5%, from about 1 to about 4%, from about 1 to about 4.5%, from about 1 to about 5%, from about 1.5 to about 2%, from about 1.5 to about 2.5%, from about 1.5 to about 3%, from about 1.5% to about 3.5%, from about 1.5 to about 4%, from about 1.5 to about 4.5%, from about 1.5 to about 5%, from about 2 to about 2.5%, from about 2 to about 3%, from about 2 to about 3.5%, from about 2 to about 4%, from about 2 to about 4.5%, from about 2 to about 5%, from about 2.5 to about 3%, from about 2.5 to about 3.5%, from about 2.5 to about 4%, from about 2.5 to about 4.5%, from about 2.5 to about 5%, from about 3 to about 3.5%, from about 3 to about 4%, from about 3 to about 4.5%, from about 3 to about 5%, from about 3.5 to about 4%, from about 3.5 to about 4.5%, from about 3.5 to about 5%, from about 4 to about 4.5%, or from about 4.5 to about 5% (w/w) of the dry weight in the batter mixture. In one aspect, the combined percentage of the one or more buffering agents is about 0.5%, about 1%, about 1.5%, about 2%, about 2.5%, about 3%, about 3.5%, about 4%, about 4.5%, or about 5% (w/w) of the dry weight in the batter mixture.

In one aspect, the one or more buffering agents comprise sodium acid pyrophosphate. In one aspect, the percentage of the sodium acid pyrophosphate is from about 0.5 to about 1%, from about 1 to about 1.5%, from about 1.5 to about 2%, from about 2 to about 2.5%, from about 2.5 to about 3%, from about 3 to about 3.5%, from about 3.5 to about 4%, from about 4 to about 4.5%, or from about 4.5 to about 5% (w/w) of the dry weight in the batter mixture. In one aspect, the percentage of the sodium acid pyrophosphate is from about 0.5 to about 1%, from about 0.5 to about 1.5%, from about 0.5 to about 2%, from about 0.5 to about 2.5%, from about 0.5 to about 3%, from about 0.5 to about 3.5%, from about 0.5 to about 4%, from about 0.5 to about 4.5%, from about 0.5 to about 5%, from about 1 to about 1.5%, from about 1 to about 2%, from about 1 to about 2.5%, from about 1 to about 3%, from about 1 to about 3.5%, from about 1 to about 4%, from about 1 to about 4.5%, from about 1 to about 5%, from about 1.5 to about 2%, from about 1.5 to about 2.5%, from about 1.5 to about 3%, from about 1.5% to about 3.5%, from about 1.5 to about 4%, from about 1.5 to about 4.5%, from about 1.5 to about 5%, from about 2 to about 2.5%, from about 2 to about 3%, from about 2 to about 3.5%, from about 2 to about 4%, from about 2 to about 4.5%, from about 2 to about 5%, from about 2.5 to about 3%, from about 2.5 to about 3.5%, from about 2.5 to about 4%, from about 2.5 to about 4.5%, from about 2.5 to about 5%, from about 3 to about 3.5%, from about 3 to about 4%, from about 3 to about 4.5%, from about 3 to about 5%, from about 3.5 to about 4%, from about 3.5 to about 4.5%, from about 3.5 to about 5%, from about 4 to about 4.5%, or from about 4.5 to about 5% (w/w) of the dry weight in the batter mixture. In one aspect, the percentage of the sodium acid pyrophosphate is about 0.5%, about 1%, about 1.5%, about 2%, about 2.5%, about 3%, about 3.5%, about 4%, about 4.5%, or about 5% (w/w) of the dry weight in the batter mixture.

In one aspect, the batter mixture used in the methods and compositions disclosed herein further comprises oil.

In another aspect, the batter mixture used in the methods and compositions disclosed herein further comprises beer.

In one aspect, the batter mixture used in the methods and compositions disclosed herein further comprises egg white, or egg yolk, or both.

In another aspect, the batter mixture used in the methods and compositions disclosed herein further comprises milk or dry milk powder.

In one aspect, the batter mixture used in the methods and compositions disclosed herein is prepared by adding cold water into the batter mixture. In one aspect, the cold water is at a temperature from 0 to 10°C before adding into the batter mixture. In one aspect, the cold water is at a temperature of about 0°C, about 0.5°C, about 1°C, about 1.5°C, about 2°C, about 2.5°C, about 3°C, about 3.5°C, about 4°C, about 4.5°C, about 5°C, about 5.5°C., about 6°C, about 6.5°C, about 7°C, about 7.5°C, about 8°C, about 8.5°C, about 9°C, about 9.5°C, or about 10°C before adding into the batter mixture. In one aspect, the cold water is at a temperature of about 7°C before adding into the batter mixture. In one aspect, the cold water is at a temperature from about 0 to about 0.5°C, from about 0.5 to about 1°C, from about 1 to about 1.5°C, from about 1.5 to about 2°C, from about 2 to about 2.5°C, from about 2.5 to about 3°C, from about 3 to about 3.5°C, from about 3.5 to about 4°C, from about 4 to about 4.5°C, from about 4.5 to about 5°C, from about 5 to about 5.5°C, from about 5.5 to about 6°C, from about 6.5 to about 7°C, from about 7 to about 7.5°C, from about 7.5 to about 8°C, from about 8 to about 8.5°C, from about 8.5 to about 9°C, from about 9 to about 9.5°C, from about 9.5 to about 10°C, from about 0 to about 1°C, from about 1 to about 2°C, from about 2 to about 3°C, from about 3 to about 4°C, from about 4 to about 5°C, from about 5 to about 6°C, from about 6 to about 7°C, from about 7 to about 8°C, from about 8 to about 9°C, from about 9 to about 10°C, from about 0.5 to about 1.5°C, from about 1.5 to about 2.5°C, from about 2.5 to about 3.5°C, from about 3.5 to about 4.5°C, from about 4.5 to about 5.5°C, from about 5.5 to about 6.5°C, from about 6.5 to about 7.5°C, from about 7.5 to about 8.5°C, from about 8.5 to about 9.5°C, from about 1 to about 3°C, from about 2 to about 4°C, from about 3 to about 5°C, from about 4 to about 6°C, from about 5 to about 7°C, from about 6 to about 8°C, from about 7 to about 9°C, or from about 8 to about 10°C before adding into the batter mixture.

In one aspect, the percentage of water used in the batter mixture described herein is from about 40 to about 80% (w/w) of the liquid batter mixture. In one aspect, the percentage of water is from about 40 to 45%, about 45 to 50%, about 50 to 55%, about 55 to 60%, about 60 to 65%, about 65 to 70%, about 70 to 75%, or about 75 to 80% (w/w) of the liquid batter mixture. In another aspect, the percentage of water is about 40%, about 41%, about 42%, about 43%, about 44%, about 45%, about 46%, about 47%, about 48%, about 49%, about 50%, about 51%, about 52%, about 53%, about 54%, about 55%, about 56%, about 57%, about 58%, about 59%, about 60%, about 61%, about 62%, about 63%, about 64%, about 65%, about 66%, about 67%, about 68%, about 69%, about 70%, about 71%, about 72%, about 73%, about 74%, about 75%, about 76%, about 77%, about 78%, about 79%, or about 80% (w/w) of the liquid batter mixture.

In one aspect, the pregelatinized pea starch is mixed into the batter mixture at a temperature from about 10 to about 25°C. In one aspect, the pregelatinized pea starch is mixed into the batter mixture at a temperature from about 10 to about 15°C, about 15 to about 20°C, or about 20 to about 25°C. In one aspect, the pregelatinized pea starch is mixed into the batter mixture at a temperature of about 10°C, about 10.5°C, about 11°C, about 11.5°C, about 12°C, about 12.5°C, about 13°C, about 13.5°C, about 14°C, about 14.5°C, about 15°C, about 15.5°C, about 16°C, about 16.5°C, about 17°C, about 17.5°C, about 18°C, about 18.5°C, about 19°C, about 19.5°C, about 20°C, about 20.5°C, about 21°C, about 21.5°C, about 22°C, about 22.5°C, about 23°C, about 23.5°C, about 24°C, about 24.5°C, or about 25°C. In one aspect, the pregelatinized pea starch is mixed into the batter mixture at a temperature from about 10 to about 11°C, from about 11 to about 12°C, from about 12 to about 13°C, from about 13 to about 14°C, from about 14 to about 15°C, from about 15 to about 16°C, from about 16 to about 17°C, from about 17 to about 18°C, from about 18 to about 19°C, from about 19 to about 20°C, from about 20 to about 21°C, from about 21 to about 22°C, from about 22 to about 23°C, from about 23 to about 24°C, from about 24 to about 25°C, from about 10 to about 12°C, from about 11 to about 13°C, from about 12 to about 14°C, from about 13 to about 15°C, from about 14 to about 16°C, from about 15 to about 17°C, from about 16 to about 18°C, from about 17 to about 19°C, from about 18 to about 20°C, from about 19 to about 21°C, from about 20 to about 22°C, from about 21 to about 23°C, from about 22 to about 24°C, or from about 23 to about 25°C. In one aspect, the pregelatinized pea starch is mixed into the batter mixture at a temperature of 18.5 °C.

In one aspect, the ratio of liquid to dry ingredients in a liquid batter mixture used in the methods and compositions described herein is about 3:2 (w/w). In one aspect, the ratio of liquid to dry ingredients in a liquid batter mixture described herein is from about 3:1 to about 1:1 (w/w). In one aspect, the ratio of liquid to dry ingredients in a liquid batter mixture used in the methods and compositions described herein is about 3:1, about 3:2, about 2:1, about 1:1, about 4:3, about 5:4, about 5:3, about 5:2, about 6:5, about 7:6, about 7:5, about 7:4, about 7:3, about 8:7, about 8:5, about 8:3, about 9:8, about 9:7, about 9:5, or about 9:4.

In one aspect, the ratio of water to dry ingredients in an aqueous batter mixture used in the methods and compositions described herein is about 3:2 (w/w). In one aspect, the ratio of water to dry ingredients in an aqueous batter mixture described herein is from about 3:1 to about 1:1 (w/w). In one aspect, the ratio of water to dry ingredients in an aqueous batter mixture used in the methods and compositions described herein is about 3:1, about 3:2, about 2:1, about 1:1, about 4:3, about 5:4, about 5:3, about 5:2, about 6:5, about 7:6, about 7:5, about 7:4, about 7:3, about 8:7, about 8:5, about 8:3, about 9:8, about 9:7, about 9:5, or about 9:4.

In one aspect, the pregelatinized pea starch is mixed into a batter mixture used in the methods and compositions described herein with an electrical mixer. In another aspect, the pregelatinized pea starch is mixed into a batter mixture used in the methods and compositions described herein with a manual mixer. Many electrical mixers are available in the market. For example, in one aspect, the pregelatinized pea starch is mixed into the batter mixture with a Hobart N50 mixer for 10 minutes at speed 1 (50 rpm).

In one aspect, the pregelatinized pea starch is mixed into a batter mixture used in the methods and compositions described herein at a speed from about 30 to about 70 rpm. In one aspect, the pregelatinized pea starch is mixed into the batter mixture at a speed of about 30 rpm, 31 rpm, 32 rpm, 33 rpm, 34 rpm, 35 rpm, 36 rpm, 37 rpm, 38 rpm, 39 rpm, 40 rpm, 41 rpm, 42 rpm, 43 rpm, 44 rpm, 45 rpm, 46 rpm, 47 rpm, 48 rpm, 49 rpm, 50 rpm, 51 rpm, 52 rpm, 53 rpm, 54 rpm, 55 rpm, 56 rpm, 57 rpm, 58 rpm, 59 rpm, 60 rpm, 61 rpm, 62 rpm, 63 rpm, 64 rpm, 65 rpm, 66 rpm, 67 rpm, 68 rpm, 69 rpm, or 70 rpm.

In another aspect, the pregelatinized pea starch is mixed into a batter mixture used in the methods and compositions described herein at a speed from about 20 to about 100 rpm. In one aspect, the pregelatinized pea starch is mixed into the batter mixture at a speed of about 20 rpm, about 25 rpm, about 30 rpm, about 35 rpm, about 40 rpm, about 45 rpm, about 50 rpm, about 55 rpm, about 60 rpm, about 65 rpm, about 70 rpm, about 75 rpm, about 80 rpm, about 85 rpm, about 90 rpm, about 95 rpm, or about 100 rpm. In one aspect, the pregelatinized pea starch is mixed into the batter mixture at a speed from about 20 to about 25 rpm, about 25 to about 30 rpm, about 30 to about 35 rpm, about 35 to about 40 rpm, about 40 to about 45 rpm, about 45 to about 50 rpm, about 50 to about 55 rpm, about 55 to about 60 rpm, about 60 to about 65 rpm, about 65 to about 70 rpm, about 70 to about 75 rpm, about 75 to about 80 rpm, about 80 to about 85 rpm, about 85 to about 90 rpm, about 90 to about 95 rpm, about 95 to about 100 rpm, about 20 to about 30 rpm, about 25 to about 35 rpm, about 30 to about 40 rpm, about 35 to about 45 rpm, about 40 to about 50 rpm, about 45 to about 55 rpm, about 50 to about 60 rpm, about 55 to about 65 rpm, about 60 to about 70 rpm, about 65 to about 75 rpm, about 70 to about 80 rpm, about 75 to about 85 rpm, about 80 to about 90 rpm, about 85 to about 95 rpm, about 90 to about 100 rpm, about 20 to about 40 rpm, about 25 to about 45 rpm, about 30 to about 50 rpm, about 35 to about 55 rpm, about 40 to about 60 rpm, about 45 to about 65 rpm, about 50 to about 70 rpm, about 55 to about 75 rpm, about 60 to about 80 rpm, about 65 to about 85 rpm, about 70 to about 90 rpm, about 75 to about 95 rpm, or about 80 to about 100 rpm.

In one aspect, the pregelatinized pea starch is mixed into a batter mixture used in the methods and compositions described herein for about 1 to about 30 minutes. In one aspect, the pregelatinized pea starch is mixed into the batter mixture for about 1 minute, about 2 minutes, about 3 minutes, about 4 minutes, about 5 minutes, about 6 minutes, about 7 minutes, about 8 minutes, about 9 minutes, about 10 minutes, about 11 minutes, about 12 minutes, about 13 minutes, about 14 minutes, about 15 minutes, about 16 minutes, about 17 minutes, about 18 minutes, about 19 minutes, about 20 minutes, about 21 minutes, about 22 minutes, about 23 minutes, about 24 minutes, about 25 minutes, about 26 minutes, about 27 minutes, about 29 minutes, or about 30 minutes. In one aspect, the pregelatinized pea starch is mixed into the batter mixture for about 1 to 2 minutes, about 2 to 3 minutes, about 3 to 4 minutes, about 4 to 5 minutes, about 5 to 6 minutes, about 6 to 7 minutes, about 7 to 8 minutes, about 8 to 9 minutes, about 9 to 10 minutes, about 10 to 11 minutes, about 11 to 12 minutes, about 12 to 13 minutes, about 13 to 14 minutes, about 14 to 15 minutes, about 15 to 16 minutes, about 16 to 17 minutes, about 17 to 18 minutes, about 18 to 19 minutes, about 19 to 20 minutes, about 20 to 21 minutes, about 21 to 22 minutes, about 22 to 23 minutes, about 23 to 24 minutes, about 24 to 25 minutes, about 25 to 26 minutes, about 26 to 27 minutes, about 27 to 28 minutes, about 28 to 29 minutes, about 29 to 30 minutes, about 1 to 3 minutes, about 2 to 4 minutes, about 3 to 5 minutes, about 4 to 6 minutes, about 5 to 7 minutes, about 6 to 8 minutes, about 7 to 9 minutes, about 8 to 10 minutes, about 9 to 11 minutes, about 10 to 12 minutes, about 11 to 13 minutes, about 12 to 14 minutes, about 13 to 15 minutes, about 14 to 16 minutes, about 15 to 17 minutes, about 16 to 18 minutes, about 17 to 19 minutes, about 18 to 20 minutes, about 19 to 21 minutes, about 20 to 22 minutes, about 21 to 23 minutes, about 22 to 24 minutes, about 23 to 25 minutes, about 24 to 26 minutes, about 25 to 27 minutes, about 26 to 28 minutes, about 27 to 29 minutes, about 28 to 30 minutes, about 1 to about 5 minutes, about 5 to about 10 minutes, about 10 to about 15 minutes, about 15 to about 20 minutes, about 20 to about 25 minutes, or about 25 to about 30 minutes.

In one aspect, the presence of the pregelatinized pea starch in the batter mixture used in the methods and compositions described herein provides viscosity to the batter mixture. In one aspect, the viscosity of a liquid batter mixture comprising pregelatinized pea starch is higher than the viscosity of a control liquid batter mixture without the pregelatinized pea starch. The viscosity of the batter mixture can be measured using a viscometer. Many viscometers are available in the market. In one aspect, the viscosity of a liquid batter mixture is measured using Brookfield DV 11+PRO viscometer attached with spindle S 27 at 18.5°C at 30 rpm.

In one aspect, the viscosity of a liquid batter mixture is measured at the temperature of about 10 to about 25°C. In one aspect, the viscosity of a liquid batter mixture is measured at the temperature of about 10°C, about 10.5°C, about 11°C, about 11.5°C, about 12°C, about 12.5°C, about 13°C, about 13.5°C, about 14°C, about 14.5°C, about 15°C, about 15.5°C, about 16°C, about 16.5°C, about 17°C, about 17.5°C, about 18°C, about 18.5°C, about 19°C, about 19.5°C, about 20°C, about 20.5°C, about 21°C, about 21.5°C, about 22°C, about 22.5°C, about 23°C, about 23.5°C, about 24°C, about 24.5°C, or about 25°C. In one aspect, the viscosity of a liquid batter mixture is measured at the temperature from about 10 to about 11°C, from about 11 to about 12°C, from about 12 to about 13°C, from about 13 to about 14°C, from about 14 to about 15°C, from about 15 to about 16°C, from about 16 to about 17°C, from about 17 to about 18°C, from about 18 to about 19°C, from about 19 to about 20°C, from about 20 to about 21°C, from about 21 to about 22°C, from about 22 to about 23°C, from about 23 to about 24°C, from about 24 to about 25°C, from about 10 to about 12°C, from about 11 to about 13°C, from about 12 to about 14°C, from about 13 to about 15°C, from about 14 to about 16°C, from about 15 to about 17°C, from about 16 to about 18°C, from about 17 to about 19°C, from about 18 to about 20°C, from about 19 to about 21°C, from about 20 to about 22°C, from about 21 to about 23°C, from about 22 to about 24°C, or from about 23 to about 25°C. In one aspect, the viscosity of a liquid batter mixture is measured at the temperature of 18.5°C.

In one aspect, the viscosity of a liquid batter mixture comprising pregelatinized pea starch is at least 5% higher, at least 10% higher, at least 15% higher, at least 20% higher, at least 25% higher, at least 30% higher, at least 35% higher, at least 40% higher, at least 45% higher, or at least 50% higher than the viscosity of a control liquid batter mixture without the pregelatinized pea starch. In one aspect, the control liquid batter mixture comprises one or more hydrocolloids. In another aspect, the control liquid batter mixture does not comprise any hydrocolloids. In one aspect, the control liquid batter mixture comprises xanthan. In one aspect, the control liquid batter mixture comprises 0.1% (w/w) xanthan in the dry weight of the batter mixture. In one aspect, the control liquid batter mixture comprises from 0.05 to 0.5% (w/w) xanthan in the dry weight of the batter mixture.

In one aspect, the viscosity of a liquid batter mixture comprising pregelatinized pea starch is greater than 2000 cps, greater than 2100 cps, greater than 2200 cps, greater than 2300 cps, greater than 2400 cps, greater than 2500 cps, greater than 2600 cps, greater than 2700 cps, greater than 2800 cps, greater than 2900 cps, greater than 3000 cps, greater than 3100 cps, greater than 3200 cps, greater than 3300 cps, greater than 3400 cps, greater than 3500 cps, greater than 3600 cps, greater than 3700 cps, greater than 3800 cps, greater than 3900 cps, greater than 4000 cps, greater than 4100 cps, greater than 4200 cps, greater than 4300 cps, greater than 4400 cps, or greater than 4500 cps when measured at 18.5°C. In one aspect, the viscosity of a liquid batter mixture comprising pregelatinized pea starch is from 2000 to 2500 cps, from 2000 to 3000 cps, from 2000 to 3500 cps, from 2000 to 4000 cps, from 2000 to 4500 cps, from 2000 to 5000 cps, from 2500 to 3000 cps, from 2500 to 3500 cps, from 2500 to 4000 cps, from 2500 to 4500 cps, from 2500 to 5000 cps, from 3000 to 3500 cps, from 3000 to 4000 cps, from 3000 to 4500 cps, from 3000 to 5000 cps, from 3500 to 4000 cps, from 3500 to 4500 cps, from 3500 to 5000 cps, from 4000 to 4500 cps, from 4000 to 5000 cps, or from 4500 to 5000 cps.

In one aspect, the viscosity of a liquid batter mixture comprising pregelatinized pea starch is higher than the viscosity of a liquid batter mixture comprising pregelatinized corn starch or pregelatinized potato starch instead of the pregelatinized pea starch. In one aspect, the viscosity of a liquid batter mixture comprising pregelatinized pea starch is higher than the viscosity of a liquid batter mixture comprising the same percentage of pregelatinized corn starch or pregelatinized potato starch instead of the pregelatinized pea starch. In one aspect, the viscosity of a liquid batter mixture comprising pregelatinized pea starch is at least 5% higher, at least 10% higher, at least 15% higher, at least 20% higher, at least 25% higher, at least 30% higher, at least 35% higher, at least 40% higher, at least 45% higher, or at least 50% higher than the viscosity of a batter mixture comprising the same percentage of pregelatinized corn starch or pregelatinized potato starch instead of the pregelatinized pea starch.

In one aspect, a liquid batter mixture comprising pregelatinized pea starch has less amount of lumps compared to a liquid batter mixture containing pregelatinized corn starch or pregelatinized potato starch instead of the pregelatinized pea starch. In another aspect, a liquid batter mixture comprising pregelatinized pea starch has less amount of lumps compared to a control liquid batter mixture without the pregelatinized pea starch.

In one aspect, the number of lumps larger than 1 millimeter (mm), larger than 2 mm, larger than 3 mm, larger than 4 mm, larger than 5 mm, larger than 6 mm, larger than 7 mm, larger than 8 mm, larger than 9 mm, or larger than 10 mm in diameter is counted. In one aspect, the number of lumps larger than 3 mm in diameter is counted. In one aspect, the number of lumps with diameter from about 1 mm to about 2 mm, from about 1 mm to about 3 mm, from about 1 mm to about 4 mm, from about 1 mm to about 5 mm, from about 1 mm to about 6 mm, from about 1 mm to about 7 mm, from about 1 mm to about 8 mm, from about 1 mm to about 9 mm, from about 1 mm to about 10 mm, from about 2 mm to about 3 mm, from about 2 mm to about 4 mm, from about 2 mm to about 5 mm, from about 2 mm to about 6 mm, from about 2 mm to about 7 mm, from about 2 mm to about 8 mm, from about 2 mm to about 9 mm, from about 2 mm to about 10 mm, from about 3 mm to about 4 mm, from about 3 mm to about 5 mm, from about 3 mm to about 6 mm, from about 3 mm to about 7 mm, from about 3 mm to about 8 mm, from about 3 mm to about 9 mm, from about 3 mm to about 10 mm, from about 4 mm to about 5 mm, from about 4 mm to about 6 mm, from about 4 mm to about 7 mm, from about 4 mm to about 8 mm, from about 4 mm to about 9 mm, from about 4 mm to about 10 mm, from about 5 mm to about 6 mm, from about 5 mm to about 7 mm, from about 5 mm to about 8 mm, from about 5 mm to about 9 mm, from about 5 mm to about 10 mm, from about 6 mm to about 7 mm, from about 6 mm to about 8 mm, from about 6 mm to about 9 mm, from about 6 mm to about 10 mm, from about 7 mm to about 8 mm, from about 7 mm to about 9 mm, from about 7 mm to about 10 mm, from about 8 mm to about 9 mm, from about 8 mm to about 10 mm, or from about 9 mm to about 10 mm is counted.

In one aspect, a liquid batter mixture comprising pregelatinized pea starch has at least 5% less, at least 10% less, at least 15% less, at least 20% less, at least 25% less, at least 30% less, at least 35% less, at least 40% less, at least 45% less, at least 50% less, at least 55% less, at least 60% less, at least 65% less, at least 70% less, at least 75% less, at least 80% less, at least 85% less, at least 90% less, or at least 95% less of lumps compared to a liquid batter mixture containing pregelatinized corn starch or pregelatinized potato starch instead of the pregelatinized pea starch. In another aspect, a liquid batter mixture comprising pregelatinized pea starch has at least 5% less, at least 10% less, at least 15% less, at least 20% less, at least 25% less, at least 30% less, at least 35% less, at least 40% less, at least 45% less, at least 50% less, at least 55% less, at least 60% less, at least 65% less, at least 70% less, at least 75% less, at least 80% less, at least 85% less, at least 90% less, or at least 95% less of lumps compared to a control liquid batter mixture without the pregelatinized pea starch.

In one aspect, the number of lumps in a liquid batter mixture is counted when the liquid batter mixture is at a temperature from about 10 to about 25°C. In one aspect, the number of lumps in a liquid batter mixture is counted when the liquid batter mixture is at the temperature of about 10°C, about 10.5°C, about 11°C, about 11.5°C, about 12°C, about 12.5°C, about 13°C, about 13.5°C, about 14°C, about 14.5°C, about 15°C, about 15.5°C, about 16°C, about 16.5°C, about 17°C, about 17.5°C, about 18°C, about 18.5°C, about 19°C, about 19.5°C, about 20°C, about 20.5°C, about 21°C, about 21.5°C, about 22°C, about 22.5°C, about 23°C, about 23.5°C, about 24°C, about 24.5°C, or about 25°C. In one aspect, the number of lumps in a liquid batter mixture is counted when the liquid batter mixture is at the temperature from about 10 to about 11°C, from about 11 to about 12°C, from about 12 to about 13°C, from about 13 to about 14°C, from about 14 to about 15°C, from about 15 to about 16°C, from about 16 to about 17°C, from about 17 to about 18°C, from about 18 to about 19°C, from about 19 to about 20°C, from about 20 to about 21°C, from about 21 to about 22°C, from about 22 to about 23°C, from about 23 to about 24°C, from about 24 to about 25°C, from about 10 to about 12°C, from about 11 to about 13°C, from about 12 to about 14°C, from about 13 to about 15°C, from about 14 to about 16°C, from about 15 to about 17°C, from about 16 to about 18°C, from about 17 to about 19°C, from about 18 to about 20°C, from about 19 to about 21°C, from about 20 to about 22°C, from about 21 to about 23°C, from about 22 to about 24°C, or from about 23 to about 25°C. In one aspect, the number of lumps in a liquid batter mixture is counted when the liquid batter mixture is at the temperature of 18.5°C.

In one aspect, a liquid batter mixture used in the methods and compositions disclosed herein is homogenous. As used herein, the term "homogenous" means that there is no visible separation of layers at least 30 minutes after the liquid batter mixture is prepared and set aside to observe the sedimentation. In one aspect, there is no visible separation of layers at least 30 minutes, at least 60 minutes, at least 90 minutes, at least 120 minutes, at least 150 minutes, at least 180 minutes, at least 210 minutes, at least 240 minutes, at least 270 minutes, at least 300 minutes, at least 330 minutes, at least 360 minutes, at least 390 minutes, at least 420 minutes, at least 450 minutes, at least 480 minutes, at least 510 minutes, at least 540 minutes, at least 570 minutes, or at least 600 minutes after the liquid batter mixture is prepared and set aside to observe the sedimentation.

In one aspect, the liquid batter mixture is set aside at a temperature from about 10 to about 25°C to observe the sedimentation. In one aspect, the liquid batter mixture is set aside at the temperature of about 10°C, about 10.5°C, about 1 1°C, about 11.5°C, about 12°C, about 12.5°C, about 13°C, about 13.5°C, about 14°C, about 14.5°C, about 15°C, about 15.5°C, about 16°C, about 16.5°C, about 17°C, about 17.5°C, about 18°C, about 18.5°C, about 19°C, about 19.5°C, about 20°C, about 20.5°C, about 21°C, about 21.5°C, about 22°C, about 22.5°C, about 23°C, about 23.5°C, about 24°C, about 24.5°C, or about 25°C. In one aspect, the liquid batter mixture is set aside at the temperature from about 10 to about 11°C, from about 11 to about 12°C, from about 12 to about 13°C, from about 13 to about 14°C, from about 14 to about 15°C, from about 15 to about 16°C, from about 16 to about 17°C, from about 17 to about 18°C, from about 18 to about 19°C, from about 19 to about 20°C, from about 20 to about 21°C, from about 21 to about 22°C, from about 22 to about 23°C, from about 23 to about 24°C, from about 24 to about 25°C, from about 10 to about 12°C, from about 11 to about 13°C, from about 12 to about 14°C, from about 13 to about 15°C, from about 14 to about 16°C, from about 15 to about 17°C, from about 16 to about 18°C, from about 17 to about 19°C, from about 18 to about 20°C, from about 19 to about 21°C, from about 20 to about 22°C, from about 21 to about 23°C, from about 22 to about 24°C, or from about 23 to about 25°C. In one aspect, the liquid batter mixture is set aside at the temperature of 18.5°C.

In one aspect, a batter mixture used in the methods and compositions disclosed herein can be used to coat a variety of food products for frying. Non-exclusive examples of food products include: meat and meat products, poultry and poultry products, fish and fish products, seafood and seafood products, vegetables and vegetable product, fruits and fruit products, grains and grain products, and diary and diary product. In one aspect, the food product is a chicken nugget.

In one aspect, a batter mixture comprising pregelatinized pea starch has higher "batter pick-up percentage" compared to a control batter mixture without the pregelatinized pea starch. The "batter pick-up percentage" may be calculated by:

$$\frac{(\text{weight of coated food product - weight of uncoated food product}) \times 100}{\text{weight of uncoated food product}}$$

In one aspect, the "batter pick-up percentage" may be calculated by coating a chicken nugget.

In one aspect, the "batter pick-up percentage" of a batter mixture comprising pregelatinized pea starch is at least 1%, at least 2%, at least 3%, at least 4%, at least 5%, at least 6%, at least 7%, at least 8%, at least 9%, at least 10%, at least 11%, at least 12%, at least 13%, at least 14%, at least 15%, at least 16%, at least 17%, at least 18%, at least 19%, at least 20%, at least 21%, at least 22%, at least 23%, at least 24%, at least 25%, at least 30%, at least 35%, at least 40%, at least 45%, or at least 50% higher than the "batter pick-up percentage" of a control batter mixture without the pregelatinized pea starch.

In one aspect, when used to coat a food product for frying, a batter mixture comprising pregelatinized pea starch has improved crispness of the fried food product compared to a control batter mixture without the pregelatinized pea starch. One non-exclusive example of measuring the texture and crispness of the fried food product is to measure the maximum sheer force of the fried food product. For example, the texture of a fried food can be tested in a Kramer Shear Cell.

In one aspect, when used to coat a food product for frying, a batter mixture comprising pregelatinized pea starch has improved coloring of the fried food product compared to a control batter mixture without the pregelatinized pea starch. The color of a fried food product may be quantitated by a colorimeter. In one aspect, the quantitated color value of a fried food product coated in batter mixture comprising pregelatinized pea starch is at least 1%, at least 2%, at least 3%, at least 4%, at least 5%, at least 6%, at least 7%, at least 8%, at least 9%, at least 10%, at least 11%, at least 12%, at least 13%, at least 14%, at least 15%, at least 16%, at least 17%, at least 18%, at least 19%, at least 20%, at least 21%, at least 22%, at least 23%, at least 24%, at least 25%, at least 30%, at least 35%, at least 40%, at least 45%, or at least 50% higher compared to the value of a fried food product coated in a control batter mixture without the pregelatinized pea starch.

Is also provided (not part of the invention) a method for deep frying a food product coated in a batter mixture described herein, comprising: frying the food product in a frying oil, where in the frying oil is at a temperature from about 300 to about 400°F and the length of time of frying is from about 1 to about 10 minutes. In one aspect, the frying oil is at a temperature from about 355 to about 375°F and the length of time of frying is from about 1 to about 10 minutes.

In one aspect, the frying oil used in the methods described herein has a temperature from 335 to 336°F, from 336 to 337°F, from 337 to 338°F, from 338 to 339°F, from 339 to 340°F, from 340 to 341°F, from 341 to 342°F, from 342 to 343°F, from 343 to 344°F, from 344 to 345°F, from 345 to 346°F, from 346 to 347°F, from 347 to 348°F, from 348 to 349°F, from 349 to 350°F, from 350 to 351°F, from 351 to 352°F, from 352 to 353°F, from 353 to 354°F, from 354 to 355°F, from 355 to 356°F, from 356 to 357°F, from 357 to 358°F, from 358 to 359°F, from 359 to 360°F, from 360 to 361°F, from 36 to 362°F, from 362° to 363°F, from 364 to 365°F, from 365 to 366°F, from 366 to 367°F, from 367 to 368°F, from 36 to 369°F, from 369° to 370°F, from 370 to 371°F, from 371 to 372°F, from 372 to 373°F, from 373 to 374°F, or from 374 to 375°F. In one aspect, the frying oil has a temperature of about 335°F, about 336°F, about 337°F, about 338°F, about 339°F, about 340°F, about 341°F, about 342°F, about 343°F, about 344°F, about 345°F, about 346°F, about 347°F, about 348°F, about 349°F, about 350°F, about 351°F, about 352°F, about 353°F, about 354°F, about 355°F, about 356°F, about 357°F, about 358°F, about 359°F, about 360°F, about 361°F, about 362°F, about 363°F, about 364°F, about 365°F, about 366°F, about 367°F, about 368°F, about 369°F. about 370°F, about 371°F, about 372°F, about 373°F, about 374°F, or about 375°F.

In one aspect, the frying oil used in the methods described herein has a temperature from about 300 to about 305°F, from about 305 to about 310°F, from about 310 to about 315°F, from about 315 to about 320°F, from about 320 to about 325°F, from about 325 to about 330°F, from about 330 to about 335°F, from about 335 to about 340°F, from about 340 to about 345°F, from about 345 to about 350°F, from about 350 to about 355°F, from about 355 to about 360°F, from about 360 to about 365°F, from about 365 to about 370°F, from about 370 to about 375°F, from about 375 to about 380°F, from about 380 to about 385°F, from about 385 to about 390°F, from about 390 to about 395°F, from about 395 to about 400°F, from about 300 to about 310°F, from about 305 to about 315°F, from about 320 to about 330°F, from about 325 to about 335°F, from about 330 to about 340°F, from about 335 to about 345°F, from about 340 to about 350°F, from about 345 to about 355°F, from about 350 to about 360°F, from about 355 to about 365°F, from about 360 to about 370°F, from about 365 to about 370°F, from about 370 to about 380°F, from about 375 to about 385°F, from about 380 to about 390°F, from about 385 to about 395°F, from about 390 to about 400°F, from about 300 to about 320°F, from about 305 to about 325°F, from about 310 to about 330°F, from about 315 to about 335°F, from about 320 to about 340°F, from about 325 to about 345°F, from about 330 to about 350°F, from about 335 to about 355°F, from about 340 to about 360°F, from about 345 to about 365°F, from about 350 to about 370°F, from about 355 to about 375°F, from about 360 to about 380°F, from about 365 to about 385°F, from about 370 to about 390°F, from about 375 to about 395°F, or from about 380 or about 400°F.

In one aspect, the frying time used in the methods described herein is from about 1 to about 2 minutes, from about 2 to about 3 minutes, from about 3 to about 4 minutes, from about 4 to about 5 minutes, from about 5 to about 6 minutes, from about 6 to about 7 minutes, from about 7 to about 8 minutes, from about 8 to about 9 minutes, or from about 9 to about 10 minutes. In one aspect, the frying time used in the methods described herein is about 1 minute, about 2 minutes, about 3 minutes, about 4 minutes, about 5 minutes, about 6 minutes, about 7 minutes, about 8 minutes, about 9 minutes, or about 10 minutes.

Non-limiting examples of flying oils used in the methods described herein include: vegetable oil, avocado oil, almond oil, corn oil, canola oil, grapeseed oil, peanut oil, soybean oil, sesame oil, sunflower oil, safflower oil, cottonseed oil, olive oil, coconut oil, and any combination thereof.

The following Examples are presented for the purposes of illustration and should not be construed as limitations.

## EXAMPLES

### Example 1: Preparation of fine granulometry pregelatinized pea starch(PREGEFLO® L100F)

Fine granulometry pregelatinized pea starch (PREGEFLO® L100F) is prepared by aggregating pea starch (PREGEFLO® L100G) using a hammer mill until the granulometry is characterized by the German norm DIN 66145 to have an "n" value of 1.2 to 1.8 and a "d" value of 100 to 120 $\mu$m.

Example 2. Preparation of batter mixtures

The wheat flour based batter mixture is made by substituting either 1%, 3%, 5%, or 7% (w/w) of the flour content with fine granulometry pregelatinized pea starch (PREGEFLO® L100F), pregelatinized corn starch (PREGEFLO® M), or pregelatinized potato starch (PREGEFLO® P100). Control flour based batter mixture does not incorporate any pregelatinized starch. Further, salt, sodium acid pyrophosphate, sodium bicarbonate, dextrose, and xanthan are mixed with the wheat flour base **(Table 1** and **Table 2).**

**Table 1.** Formulation of PREGEFLO® L100F wheat flour batter mix.

| Ingredients | Control | 1% PREGEFLO® L100F | 3% PREGEFLO® L100F | 5% PREGEFLO® L100F | 7% PREGEFLO® L100F |
|---|---|---|---|---|---|
| Wheat flour (~10% protein) (w/w) | 92.3% | 91.4% | 89.4% | 87.4% | 85.4% |
| PREGEFLO® L100F (w/w) | 0% | 1% | 3% | 5% | 7% |
| Salt (w/w) | 5% | 5% | 5% | 5% | 5% |
| Sodium acid pyrophosphate (w/w) | 1% | 1% | 1% | 1% | 1% |
| Sodium bicarbonate (w/w) | 0.8% | 0.8% | 0.8% | 0.8% | 0.8% |
| Dextrose (w/w) | 0.8% | 0.8% | 0.8% | 0.8% | 0.8% |
| Xanthan (w/w) | 0.1% | 0% | 0% | 0% | 0% |
| Total | 100% | 100% | 100% | 100% | 100% |

**Table 2.** Formulation of PREGEFLO® M and PREGEFLO® P 100 wheat flour batter mix.

| Ingredients | 1% pregel starch | 3% pregel starch | 5% pregel starch | 7% pregel starch |
|---|---|---|---|---|
| Wheat flour (~10% protein) (w/w) | 91.4% | 89.4% | 87.4% | 85.4% |
| PREGEFLO® L100F (pea) or M (com) or P100 (potato) (w/w) | 1% | 3% | 5% | 7% |
| Salt (w/w) | 5% | 5% | 5% | 5% |

(continued)

| Ingredients | 1% pregel starch | 3% pregel starch | 5% pregel starch | 7% pregel starch |
|---|---|---|---|---|
| Sodium acid pyrophosphate (w/w) | 1% | 1% | 1% | 1% |
| Sodium bicarbonate (w/w) | 0.8% | 0.8% | 0.8% | 0.8% |
| Dextrose (w/w) | 0.8% | 0.8% | 0.8% | 0.8% |
| Xanthan (w/w) | 0% | 0% | 0% | 0% |
| Total | 100% | 100% | 100% | 100% |

## Example 3. Evaluation of the viscosity of wheat flour based batter mixtures comprising PREGEFLO® L100F

Viscosity is determined by making 500 grams (g) of aqueous wheat flour batter mixture where 60% (w/w) of cold water at 7°C is added to 40% (w/w) of dry wheat flour batter mix into a Hobart N50 mixer and mixed for 10 minutes at 50 rpm (speed 1). Once water and dry wheat flour batter mix are combined to form an aqueous wheat flour batter, the temperate of the batter is maintained at 18.5°C. Viscosity is determined using a Brookfield DV 11+PRO viscometer with a spindle S 27 at 30 rpm and at a temperature of 18.5 °C in triplicates. Viscosity readings for the aqueous wheat flour batter mix control, 1% PREGEFLO® L 100F, 3% PREGEFLO® L 100F, 5% PREGEFLO® L100F, 7% PREGEFLO® L100F, 5% PREGEFLO® M, 7% PREGEFLO® M, 5% PREGEFLO®P100, and 7% PREGEFLO® P100 are presented in **Table 3** for PREGEFLO® L100F and **Table 4** for PREGEFLO® M and PREGEFLO® P100.

Viscosity of the aqueous wheat flour batter mix with 5% and 7% PREGEFLO® L100F is visually improved compared to control, 1%, and 3% PREGEFLO® L100F.

The viscosity reading is increased at 5% and 7% PREGEFLO® L100F compared to control. The viscosity of PREGEFLO® L100F is also increased when compared to PREGEFLO® M and PREGEFLO® P100 at 5% and 7% respectively **(Table 4).**

**Table 3.** Batter viscosity reading of PREGEFLO® L100F wheat flour batter mixtures.

| Viscosity (cps) | Control | 1% PREGEFLO® L100F | 3% PREGEFLO® L100F | 5% PREGEFLO® L100F | 7% PREGEFLO® L100F |
|---|---|---|---|---|---|
| Avef STD | 2964±28.1 | 2221±28.2 | 2706±60.9 | 3361±77.2 | 4015±94.5 |

**Table 4.** Batter viscosity reading of 5% and 7% PREGEFLO® L100F, PREGEFLO® P100, and PREGEFLO® M wheat flour batter mixtures.

| Viscosity (cps) | PREGEFLO® L100F | PREGEFLO® P100 | PREGEFLO® M |
|---|---|---|---|
| 5% Average±STD | 3361±77.2 | 2077±85 | 2170±81.1 |
| 7% Average±STD | 4015±94.5 | 2889±298.2 | 3020±270.5 |

## Example 4. Assessment of lumping of aqueous wheat flour based batter mixtures with PREGEFLO® L100F

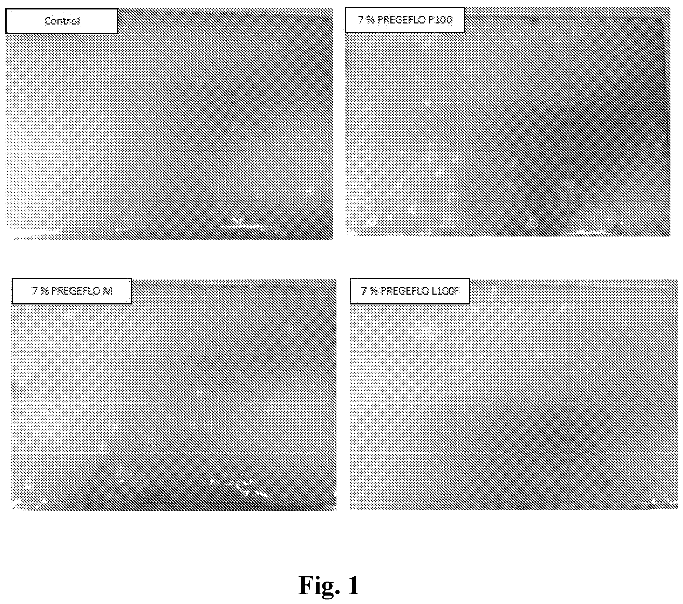

To determine the presence of lumping in the 7% PREGEFLO® L100F aqueous wheat flour based batter mixture, 500 g of aqueous wheat flour batter mixture is made, where 60% (w/w) of cold water at 7°C is added to 40% (w/w) of dry wheat flour batter mix into a Hobart N50 mixer and mixed for 10 minutes at 50 rpm (speed 1). Once water and dry wheat flour batter mix are combined, the temperature of the batter is maintained at 18.5°C. 30 g of the aqueous wheat flour batter mixture is poured onto a 6" by 9" Plexiglas sheet. The number of lumps larger than 3mm are counted. The 7% PREGEFLO® L100F aqueous wheat flour mix has the least number of lumps when compared to 7% PREGEFLO® M and 7% PREGEFLO® P100 aqueous wheat flour mix assessed under the same conditions. **(Figure 1).**

## Example 5: Assessment of sedimentation of aqueous wheat flour based batter mixtures

Sedimentation of 7% PREGEFLO® L100F aqueous wheat flour based batter mixture is compared with 7% PREGEFLO® M and 7% PREGEFLO® P100 aqueous wheat flour based batter mixtures. 500g of aqueous wheat flour batter mixture is made, where 60% (w/w) of cold water at 7°C is added to 40% (w/w) of dry wheat flour batter mix into a Hobart N50 mixer and mixed for 10 min at 50 rpm (speed 1). Once water and dry wheat flour batter mix are combined, the temperature of the batter is maintained at 18.5°C. 200g of each batter to be tested is poured into a container. Sedimentation is measured at 0.5 h, 1.5 h, and 3 h, based on visual separation of layers. There is no sedimentation visualized in any of the batter mixtures at any of the 0.5 h, 1.5 h, and 3 h time points.

**Example 6. Batter pick-up, texture analysis, and color analysis of 5% and 7% PREGEFLO® L100F wheat flour based batter mixtures**

The ingredient list for wheat flour based batter mix for deep frying is listed in Table 5. 500 g of control, 5%, and 7% PREGEFLO® L100F aqueous wheat flour batter mixtures are made, where 60% (w/w) of cold water at 7°C is added to 40% (w/w) of dry wheat flour batter mix in to a Hobart N50 mixer and mixed for 10 min at 50 rpm (speed 1). Once water and dry wheat flour batter mix are combined, the temperate of the batter is maintained at 18.5°C. Chicken nuggets are dipped in the batter mixtures, and the batter pick-up is measured by using the formula:

$$\frac{\text{weight of coated chicken nugget - weight of uncoated chicken nugget) x 100}}{\text{weight of uncoated chicken nugget}}$$

Results are described in **Table 6.** The batter pick-up is increased in 5% and 7% PREGEFLO® L 100F aqueous wheat flour batter mixtures compared with control.

The crispness is assessed by detecting the maximum shear force and number of peaks of the batter on the chicken nuggets once fried. Chicken nuggets coated in control, 5%, and 7% PREGEFLO® L100F aqueous wheat flour batter mixtures are deep fried for 3 minutes in vegetable oil at about 365°F ($\pm$ 2°F). Nuggets are loaded into a Kramer shear cell with a multiblade and 30kg load. The mode measure force is in compression, the test speed is 2mm/sec, and the distance traveled from the starting position is 48mm. The chicken nuggets are loading in one layer with a maximum height of approximately 20mm. The blades move from the start position to touch the chicken nuggets and penetrates 0.5mm. Maximum shear force and the number of peaks over the chicken nugget is calculated to determine crispness **(Table 6).** The maximum sheer force of control, 5%, and 7% PREGEFLO® L 100F aqueous wheat flour batter mixtures does not change, but the number of peaks is increased in the 5% and 7% PREGEFLO® L100F aqueous wheat flour batter mixtures compared with control.

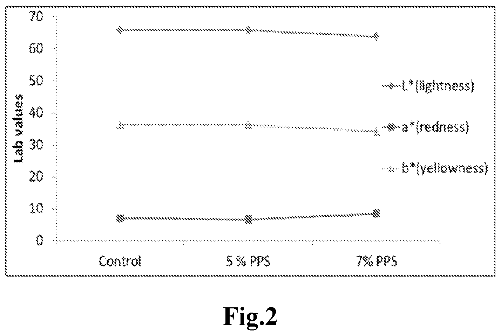

The color of the fried chicken nuggets coated in control, 5%, and 7% PREGEFLO® L100F aqueous wheat flour batter mixtures is measured using a Hunter Miniscan XE Colorimeter. "L" is a reading of lightness, "a" is a reading of redness, and "b" is a reading of yellowness **(Figure 2).** The chicken nuggets coated in 7% PREGEFLO® L100F aqueous wheat flour batter mix demonstrate a lower "L" value and a higher "a" value than the control batter coated nuggets.

**Table 5.** Formulation of PREGEFLO® L100F wheat flour batter mixtures for deep frying

| Ingredients | Control | 5% PREGEFLO® L100F | 7% PREGEFLO® L100F |
|---|---|---|---|
| Wheat flour (w/w) | 92.3% | 87.4% | 85.4% |
| PREGEFLO® L100F (w/w) | 0% | 5% | 7% |
| Salt (w/w) | 5% | 5% | 5% |
| Leaving agent (w/w) | 1.8% | 1.8% | 1.8% |
| Dextrose (w/w) | 0.8% | 0.8% | 0.8% |
| Xanthan gum (w/w) | 0.1% | 0.1% | 0.1% |
| Total | 100% | 100% | 100% |

**Table 6.** Batter pick-up and texture measurement of nuggets

| Sample | Batter pick-up % | Maximum shear force (g) | Number of peaks |
|---|---|---|---|
| Control | 125 | 10.04 | 37 |
| 5% PREGEFLO® L100F | 130 | 8.94 | 81 |
| 7% PREGEFLO® L100F | 137 | 9.54 | 88 |

**Claims**

1. A method for preparing a batter mixture free of hydrocolloids, comprising

   a) providing a pregelatinized pea starch, wherein the pregelatinized pea starch has a granulometry **characterized by** a "n" value and "d" value according to German norm DIN 66145, wherein the "n" value is from 1.2 to 1.8 and the "d" value is from 80 to 150 $\mu$m and
   b) mixing the pregelatinized pea starch into a batter mixture, wherein the percentage of the pregelatinized pea starch is from 1 to 10% (w/w) of the dry weight in the batter mixture, and wherein the batter mixture does not comprise a hydrocolloid.

2. The method of claim 1, comprising:

   a) providing the pregelatinized pea starch, wherein the "d" value is from 100 to 120 $\mu$m;
   b) mixing the pregelatinized pea starch with wheat flour to make a batter mix, wherein the pregelatinized pea starch comprises from 1% to 7% (w/w) of the dry weight in the batter mix, whereby combined pregelatinized pea starch and wheat flour constitutes 92 to 94% of the dry weight in the batter mix;
   c) providing 4 to 6% (w/w) of salt, 0.5 to 1.5% (w/w) of sodium acid pyrophosphate, 0.6 to 1% (w/w) of sodium bicarbonate, and 0.6 to 1% (w/w) of dextrose to the batter mix; and
   d) providing water at 7°C to the batter mix, wherein the ratio of water to dry ingredients in the batter mix is 3:2 (w/w), wherein the water and the dry ingredients is mixed for 8 to 12 minutes and maintained at 16 to 20.5°C.

3. The method of claim 1 or 2, wherein the percentage of the pregelatinized pea starch is about 1%, about 1.5%, about 2%, about 2.5%, about 3%, about 3.5%, about 4%, about 4.5%, about 5%, about 5.5%, about 6%, about 6.5%, about 7%, about 7.5%, about 8%, about 8.5%, about 9%, about 9.5%, or about 10% (w/w) of the dry weight in the batter mixture.

4. The method of any one of claims 1 to 3, wherein the batter mixture further comprises:

   (a) one or more flours;
   (b) one or more leavening agents; or
   (c) one or more flavoring agents.

5. The method of any one of claims 1 to 4, wherein the batter mixture is a dry mixture, a liquid mixture, or an aqueous liquid mixture.

6. The method of claim 5, wherein the viscosity of the batter mixture comprising the pregelatinized pea starch is higher than the viscosity of a control batter mixture without the pregelatinized pea starch.

7. T batter mixture composition, comprising a fine granulometry pregelatinized pea starch, wherein the pregelatinized pea starch has a granulometry **characterized by** a "n" value and "d" value according to German norm DIN 66145, wherein the "n" value is from 1.2 to 1.8 and the "d" value is from 80 to 150 $\mu$m and wherein the percentage of the pregelatinized pea starch is from 1 to 10% (w/w) of the dry weight in the batter mixture, and wherein the composition is free of hydrocolloids.

8. The composition of claim 7, wherein the percentage of the pregelatinized pea starch is about 1%, about 1.5%, about 2%, about 2.5%, about 3%, about 3.5%, about 4%, about 4.5%, about 5%, about 5.5%, about 6%, about 6.5%, about 7%, about 7.5%, about 8%, about 8.5%, about 9%, about 9.5%, or about 10% (w/w) of the dry weight in the batter mixture.

9. The composition of claim 7 or 8, wherein the batter mixture further comprises one or more flours, one or more leavening agents, or one or more flavoring agents.

10. The composition of any one of claims 7 to 9, wherein the batter mixture is a dry mixture, a liquid mixture, or an aqueous liquid mixture.

11. T method of coating a food product, comprising:

coating a food product in a batter mixture, wherein the batter mixture comprises a pregelatinized pea starch, wherein the pregelatinized pea starch has a granulometry **characterized by** a "n" value and "d" value according to German norm DIN 66145,
wherein the "n" value is from 1.2 to 1.8 and the "d" value is from 80 to 150 $\mu$m, and
wherein the percentage of the pregelatinized pea starch is from 1 to 10% (w/w) of the dry weight in the batter mixture, and wherein the batter mixture is free of hydrocolloids.

12. The method of claim 11, further comprising:

coating the food product in the pregelatinized pea starch mixed with wheat flour and water to form a batter mix, wherein the batter mix comprises from 1 to 7% (w/w of the dry weight) pregelatinized pea starch, 5% (w/w) of salt, 1% (w/w) of sodium acid pyrophosphate, 0.8% (w/w) of sodium bicarbonate, and 0.8% (w/w) dextrose, wherein the ratio of water to dry ingredients in the batter mix is 3:2 (w/w), and
wherein the batter mix exhibits a Brookfield viscosity from about 2000 cps to about 4500 cps.

## Patentansprüche

1. Verfahren zur Herstellung einer hydrokolloidfreien Teigmischung, Schritte umfassend, bei denen man

a) eine vorgelatinierte Erbsenstärke bereitstellt, wobei die vorgelatinierte Erbsenstärke eine Granulometrie aufweist, die durch einen "n"-Wert und einen "d"-Wert gemäß der deutschen Norm DIN 66145 gekennzeichnet ist, wobei der "n"-Wert von 1,2 bis 1,8 und der "d"-Wert von 80 bis 150 $\mu$m beträgt, und
b) die vorgelatinierte Erbsenstärke mit einer Teigmischung mischt, wobei der Prozentsatz der vorgelatinierten Erbsenstärke 1 bis 10 % (Gew/Gew) des Trockengewichts in der Teigmischung beträgt, und wobei die Teigmischung kein Hydrokolloid umfasst.

2. Verfahren gemäß Anspruch 1, Schritte umfassend, bei denen man:

a) die vorgelatinierte Erbsenstärke bereitstellt und wobei der "d"-Wert zwischen 100 und 120 $\mu$m liegt;
b) die vorgelatinierte Erbsenstärke mit Weizenmehl mischt, um eine Teigmischung herzustellen, wobei die vorgelatinierte Erbsenstärke 1 % bis 7 % (Gew/Gew) des Trockengewichts in der Teigmischung ausmacht, und wobei die Kombination aus vorgelatinierter Erbsenstärke und Weizenmehl 92 bis 94 % des Trockengewichts der Teigmischung ausmacht;
c) 4 bis 6 % (Gew/Gew) Salz, 0,5 bis 1,5 % (Gew/Gew) Natriumpyrophosphat, 0,6 bis 1 % (Gew/Gew) Natriumbicarbonat und 0,6 bis 1 % (Gew/Gew) Dextrose zu der Teigmischung gibt; und
d) Wasser mit einer Temperatur von 7°C zu der Teigmischung gibt, wobei das Verhältnis von Wasser zu trockenen Zutaten in der Teigmischung 3:2 (Gew/Gew) beträgt, und wobei das Wasser und die trockenen Zutaten 8 bis 12 Minuten lang gemischt und bei 16 bis 20,5 °C gehalten werden.

3. Verfahren gemäß Anspruch 1 oder 2, bei dem der Prozentsatz der vorgelatinierten Erbsenstärke etwa 1 %, etwa 1,5 %, etwa 2 %, etwa 2,5 %, etwa 3 %, etwa 3,5 %, etwa 4 %, etwa 4,5 %, etwa 5 %, etwa 5,5 %, etwa 6 %, etwa 6,5 %, etwa 7 %, etwa 7,5 %, etwa 8 %, etwa 8,5 %, etwa 9 %, etwa 9,5 % oder etwa 10 % (Gew/Gew) des Trockengewichts der Teigmischung beträgt.

4. Verfahren gemäß einem der Ansprüche 1 bis 3, bei dem die Teigmischung weiterhin umfasst:

(a) ein oder mehrere Mehle;
(b) ein oder mehrere Backtriebmittel; oder
(c) einen oder mehrere Aromastoffe.

5. Verfahren gemäß einem der Ansprüche 1 bis 4, bei dem die Teigmischung eine Trockenmischung, eine Flüssigkeitsmischung oder eine wässrige Flüssigkeitsmischung ist.

6. Verfahren gemäß Anspruch 5, bei dem die Viskosität der Teigmischung, welche die vorgelatinierte Erbsenstärke enthält, höher als die Viskosität einer Kontrollteigmischung ohne die vorgelatinierte Erbsenstärke ist.

7. Zusammensetzung einer Teigmischung, die eine vorgelatinierte Erbsenstärke mit einer Granulometrie umfasst, wobei die vorgelatinierte Erbsenstärke eine feine Granulometrie aufweist, die durch einen "n"-Wert und einen "d"-Wert gemäß der deutschen Norm DIN 66145 gekennzeichnet ist, wobei der "n"-Wert von 1,2 bis 1,8 und der "d"-Wert von 80 bis 150 μm beträgt und wobei der Prozentsatz der vorgelatinierten Erbsenstärke von 1 bis 10 % (Gew/Gew) des Trockengewichts der Teigmischung beträgt und wobei die Zusammensetzung frei von Hydrokolloiden ist.

8. Zusammensetzung gemäß Anspruch 7, in der der Prozentsatz der vorgelatinierten Erbsenstärke etwa 1 %, etwa 1,5 %, etwa 2 %, etwa 2,5 %, etwa 3 %, etwa 3,5 %, etwa 4 %, etwa 4,5 %, etwa 5 %, etwa 5,5 %, etwa 6 %, etwa 7 %, etwa 7,5 %, etwa 8 %, etwa 8,5 %, etwa 9 %, etwa 9,5 % oder etwa 10 % (Gew/Gew) des Trockengewichts der Teigmischung beträgt.

9. Zusammensetzung gemäß Anspruch 7 oder 8, in der die Teigmischung außerdem ein oder mehrere Mehle, ein oder mehrere Backtriebmittel oder ein oder mehrere Aromastoffe enthält.

10. Zusammensetzung gemäß einem der Ansprüche 7 bis 9, in der die Teigmischung eine Trockenmischung, eine Flüssigkeitsmischung oder eine wässrige Flüssigkeitsmischung ist.

11. Verfahren zum Beschichten eines Nahrungsmittels, Schritte umfassend, bei denen man:
ein Lebensmittel mit in einer Teigmischung beschichtet, wobei die Teigmischung eine vorgelatinierte Erbsenstärke umfasst, wobei die vorgelatinierte Erbsenstärke eine Granulometrie aufweist, die durch einen "n"-Wert und einen "d"-Wert gemäß der deutschen Norm DIN 66145 gekennzeichnet ist, wobei der "n"-Wert von 1,2 bis 1,8 und der "d"-Wert 80 bis 150 μm beträgt, und wobei der Prozentsatz der vorgelatinierten Erbsenstärke 1 bis 10 % (Gew/Gew) des Trockengewichts der Teigmischung beträgt und wobei die Teigmischung frei von Hydrokolloiden ist.

12. Verfahren gemäß Anspruch 11, ferner Schritte umfassend, bei denen man:

das Lebensmittel mit der vorgelatinierten Erbsenstärke beschichtet, wobei die vorgelatinierte Erbsenstärke mit Weizenmehl und Wasser vermischt wurde, um eine Teigmischung zu bilden, wobei die Teigmischung 1 bis 7 % (Gew/Gew des Trockengewichts) der vorgelatinierten Erbsenstärke, 5 % (Gew/Gew) Salz, 1 % (Gew/Gew) saures Natriumpyrophosphat, 0,8 % (Gew/Gew) Natriumbicarbonat und 0,8 % (Gew/Gew) Dextrose umfasst; wobei das Verhältnis zwischen Wasser und trockenen Zutaten in der Teigmischung 3:2 (Gew/Gew) beträgt, und wobei die Teigmischung eine Brookfield-Viskosität von etwa 2000 cps bis etwa 4500 cps aufweist.

**Revendications**

1. Procédé de préparation d'un mélange de pâte exempt d'hydrocolloïdes, comprenant

a) le fait de fournir un amidon de pois prégélatinisé, dans lequel l'amidon de pois prégélatinisé présente une granulométrie **caractérisée par** une valeur « n » et une valeur « d » selon la norme allemande DIN 66145, la valeur « n » étant comprise entre 1,2 et 1,8 et la valeur « d » étant comprise entre 80 et 150 μm et
b) le fait de mélanger l'amidon de pois prégélatinisé à un mélange de pâte, dans lequel le pourcentage d'amidon de pois prégélatinisé représente 1 à 10 % (p/p) du poids sec dans le mélange de pâte, et dans lequel le mélange de pâte ne comprend pas d'hydrocolloïde.

2. Procédé selon la revendication 1, comprenant

a) le fait de fournir l'amidon de pois prégélatinisé, dans lequel la valeur « d » est comprise entre 100 et 120 μm ;
b) le fait de mélanger l'amidon de pois prégélatinisé à de la farine de blé pour obtenir une pâte, dans lequel l'amidon de pois prégélatinisé représente 1 % à 7 % (p/p) du poids sec de la pâte, l'amidon de pois prégélatinisé combiné à la farine de blé constituant 92 à 94 % du poids sec de la pâte ;
c) le fait de fournir 4 à 6 % (p/p) de sel, 0,5 à 1,5 % (p/p) de pyrophosphate acide de sodium, 0,6 à 1 % (p/p) de bicarbonate de sodium, et 0,6 à 1 % (p/p) de dextrose au mélange de pâte ; et
d) le fait de fournir de l'eau à 7°C au mélange de pâte, dans lequel le rapport entre l'eau et les ingrédients secs dans le mélange de pâte est de 3:2 (p/p), l'eau et les ingrédients secs étant mélangés pendant 8 à 12 minutes et maintenus à une température comprise entre 16 et 20,5°C.

3. Procédé selon la revendication 1 ou 2, dans lequel le pourcentage d'amidon de pois prégélatinisé représente environ 1 %, environ 1,5 %, environ 2 %, environ 2,5 %, environ 3 %, environ 3,5 %, environ 4 %, environ 4,5 %, environ 5 %, environ 5,5 %, environ 6 %, environ 6,5 %, environ 7 %, environ 7,5 %, environ 8 %, environ 8,5 %, environ 9 %, environ 9,5 % ou environ 10 % (p/p) du poids sec dans le mélange de pâte.

4. Procédé selon l'une quelconque des revendications 1 à 3, dans lequel le mélange de pâte comprend en outre :

   (a) une ou plusieurs farines ;
   (b) un ou plusieurs agents levants ; ou
   (c) un ou plusieurs agents aromatisants.

5. Procédé selon l'une quelconque des revendications 1 à 4, dans lequel le mélange de pâte est un mélange sec, un mélange liquide ou un mélange liquide aqueux.

6. Procédé selon la revendication 5, dans lequel la viscosité du mélange de pâte comprenant l'amidon de pois prégélatinisé est supérieure à la viscosité d'un mélange de pâte de référence sans amidon de pois prégélatinisé.

7. Composition de mélange de pâte, comprenant un amidon de pois prégélatinisé à granulométrie fine, dans laquelle l'amidon de pois prégélatinisé présente une granulométrie **caractérisée par** une valeur « n » et une valeur « d » selon la norme allemande DIN 66145, dans laquelle la valeur « n » est comprise entre 1,2 et 1,8 et la valeur « d » est comprise entre 80 à 150 $\mu$m et dans laquelle le pourcentage d'amidon de pois prégélatinisé représente 1 à 10 % (p/p) du poids sec dans le mélange de pâte, et la composition étant exempte d'hydrocolloïdes.

8. Composition selon la revendication 7, dans laquelle le pourcentage d'amidon de pois prégélatinisé représente environ 1 %, environ 1,5 %, environ 2 %, environ 2,5 %, environ 3 %, environ 3,5 %, environ 4 %, environ 4,5 %, environ 5 %, environ 5,5 %, environ 6 %, environ 6,5 %, environ 7 %, environ 7,5 %, environ 8 %, environ 8,5 %, environ 9 %, environ 9,5 %, ou environ 10 % (p/p) du poids sec dans le mélange de pâte.

9. Composition selon la revendication 7 ou 8, dans laquelle le mélange de pâte comprend en outre une ou plusieurs farines, un ou plusieurs agents levants, ou un ou plusieurs agents aromatisants.

10. Composition selon l'une quelconque des revendications 7 à 9, dans laquelle le mélange de pâte est un mélange sec, un mélange liquide ou un mélange liquide aqueux.

11. Procédé d'enrobage d'un produit alimentaire, comprenant :
    le fait d'enrober un produit alimentaire dans un mélange de pâte, dans lequel le mélange de pâte comprend un amidon de pois prégélatinisé, l'amidon de pois prégélatinisé présentant une granulométrie **caractérisée par** une valeur « n » et une valeur « d » selon la norme allemande DIN 66145, la valeur « n » étant comprise entre 1,2 à 1,8 et la valeur « d » étant comprise entre 80 et 150 $\mu$m et dans lequel le pourcentage d'amidon de pois prégélatinisé représente 1 à 10 % (p/p) du poids sec dans le mélange de pâte, et dans lequel le mélange de pâte est exempt d'hydrocolloïdes.

12. Procédé selon la revendication 11, comprenant en outre :

    le fait d'enrober un produit alimentaire dans de l'amidon de pois prégélatinisé mélangé à de la farine de blé et à de l'eau afin de former un mélange de pâte, dans lequel le mélange de pâte comprend 1 à 7 % (p/p du poids sec) d'amidon de pois prégélatinisé, 5 % (p/p) de sel, 1 % (p/p) de pyrophosphate acide de sodium, 0,8 % (p/p) de bicarbonate de sodium, et 0,8 % (p/p) de dextrose,
    dans lequel le rapport entre l'eau et les ingrédients secs dans le mélange de pâte est de 3:2 (p/p), et
    dans lequel le mélange de pâte présente une viscosité Brookfield d'environ 2000 cps à environ 4500 cps.

**Fig. 1**

**Fig.2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2011101664 A1

### Non-patent literature cited in the description

- The American Heritage® Science Dictionary. Houghton Mifflin Harcourt, 2011
- McGraw-Hill Dictionary of Scientific and Technical Terms. McGraw-Hill, 2002
- Oxford Dictionary of Biology. Oxford University Press, 2008